(19) Europäisches Patentamt
European Patent Office
Office européen des brevets

(11) EP 4 775 394 A1

(12) EUROPEAN PATENT APPLICATION
published in accordance with Art. 153(4) EPC

(43) Date of publication:
**15.07.2026 Bulletin 2026/29**

(21) Application number: **24862803.4**

(22) Date of filing: **04.09.2024**

(51) International Patent Classification (IPC):
***B32B 23/02*** *(2006.01)* ***B32B 5/02*** *(2006.01)*
***B32B 5/28*** *(2006.01)* ***B32B 23/04*** *(2006.01)*
***C08B 15/04*** *(2006.01)*

(52) Cooperative Patent Classification (CPC):
**B32B 5/02; B32B 5/28; B32B 23/02; B32B 23/04; C08B 15/04**

(86) International application number:
**PCT/JP2024/031646**

(87) International publication number:
**WO 2025/053151 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.09.2023 JP 2023143780**

(71) Applicant: **Oji Holdings Corporation**
**Chuo-ku**
**Tokyo 104-0061 (JP)**

(72) Inventors:
- **OKUDA, Keiko**
  **Tokyo 104-0061 (JP)**
- **FUSHIMI, Hayato**
  **Tokyo 104-0061 (JP)**
- **NISHIMURA, Masaki**
  **Tokyo 104-0061 (JP)**

(74) Representative: **Godemeyer Blum Lenze Patentanwälte**
**Partnerschaft mbB - werkpatent**
**An den Gärten 7**
**51491 Overath (DE)**

# (54) LAMINATE

(57) The purpose of the present invention is to provide a laminate that is less susceptible to adherence thereto by dirt such as dust and that has excellent laser cutter processability.

This laminate comprises: a fine fibrous cellulose-containing layer that contains fine fibrous cellulose having a fiber width of 1-1,000 nm; and a cationic layer that is on at least one surface of the fine fibrous cellulose-containing layer and that contains a cationic compound.

EP 4 775 394 A1

## Description

### Technical Field

The present invention relates to a laminate.

### Background Art

In recent years, materials using renewable natural fibers have attracted attention due to increased awareness of alternatives to petroleum resources and environmental consciousness. Among natural fibers, fibrous cellulose having a fiber width of 10 μm or more and 50 μm or less, particularly wood-derived fibrous cellulose (pulp) has been widely used mainly as paper products so far.

As the fibrous cellulose, fine fibrous cellulose having a fiber width of 1,000 nm or less is also known. Furthermore, a sheet made of such fine fibrous cellulose, and a composite sheet and a molded article containing fine fibrous cellulose and resin have been developed. In a sheet and a molded article containing fine fibrous cellulose, it is known that the tensile strength and the like are greatly improved because the number of contact points between fibers is significantly increased.

Patent Literature 1 discloses, for the purpose of providing a sheet having high transparency with a low linear thermal expansion coefficient, suppressed yellowness, and a high tensile elastic modulus, a sheet obtained by curing a sheet composition containing an ultraviolet polymerizable compound and a fine fibrous cellulose having a fiber width of 1,000 nm or less with ultraviolet rays, wherein the sheet has a linear thermal expansion coefficient of 30 ppm/K or less at 100°C or higher and 150°C or lower and a yellow index (YI value) of 5 or less.

### Citation List

#### Patent Literature

Patent Literature 1:JP 2022-104299 A

### Summary of Invention

#### Technical Problem

Since the fine fibrous cellulose-containing sheet has excellent mechanical strength such as tensile strength as well as excellent transparency, the fine fibrous cellulose-containing sheet is used as a laminate combined with a resin layer or the like as a member of various products including precision devices such as a display device, an electronic device, and a home electric appliance. Since the laminate is used as a member of the above products, the laminate is required to have characteristics that dirt such as dust hardly adheres. In addition, the laminate is processed with a laser cutter to obtain a member having a desired form. Therefore, the laminate is required to have excellent laser cutter processability, that is, characteristics that transparency hardly deteriorates due to occurrence of whitening at processed sites even when processed with a laser cutter. However, in Patent Literature 1, these characteristics are not examined.

An object of the present invention is to provide a laminate that is less susceptible to adherence of dirt such as dust and that has excellent laser cutter processability.

#### Solution to Problem

The present inventors have found that the above problems are solved by a laminate including: a fine fibrous cellulose-containing layer that contains a fine fibrous cellulose having a fiber width of 1 nm or more and 1,000 nm or less; and a cationic layer that is on at least one surface of the fine fibrous cellulose-containing layer and that contains a cationic compound.

Specifically, the present invention relates to the following <1> to <12>.

<1> A laminate including:

a fine fibrous cellulose-containing layer that contains a fine fibrous cellulose having a fiber width of 1 nm or more and 1,000 nm or less; and
a cationic layer that is on at least one surface of the fine fibrous cellulose-containing layer and that contains a cationic compound.

<2> The laminate according to <1>, wherein the fine fibrous cellulose has an anionic group.
<3> The laminate according to <2>, wherein the anionic group includes at least one selected from the group consisting of a phosphorus oxoacid group, a sulfur oxoacid group, a carboxy group, and a xanthate group.
<4> The laminate according to any one of <2> or <3>, wherein an amount of anionic groups introduced into the fine fibrous cellulose is less than 0.5 mmol/g.
<5> The laminate according to any one of <1> to <4>, wherein the cationic compound has an amino group.
<6> The laminate according to any one of <1> to <5>, wherein a content of the fine fibrous cellulose in the fine fibrous cellulose-containing layer is 30% by mass or more.
<7> The laminate according to any one of <1> to <6>, wherein the fine fibrous cellulose-containing layer contains a hydrophilic polymer, and a content of the hydrophilic polymer based on 100 parts by mass of the fine fibrous cellulose is 5 parts by mass or more and 40 parts by mass or less.
<8> The laminate according to any one of <1> to <7>, wherein a total light transmittance of the laminate is 80% or more.
<9> The laminate according to any one of <1> to <8>, wherein a linear thermal expansion coefficient of the laminate in a measurement range of 100°C or higher and 150°C or lower is 70ppm/K or less.
<10> The laminate according to any one of <1> to <9>, wherein a tensile elastic modulus of the laminate at 23°C is 5.0 GPa or more.
<11> The laminate according to any one of <1> to <10>, wherein the laminate includes: a cationic layer on one surface of the fine fibrous cellulose-containing layer; and a substrate film layer on a surface opposite to the surface having the cationic layer of the fine fibrous cellulose-containing layer.
<12> The laminate according to any one of <1> to <11>, wherein the fine fibrous cellulose-containing layer and the cationic layer are in contact with each other.

Advantageous Effects of Invention

According to the present invention, there is provided a laminate that is less susceptible to adherence of dirt such as dust and that has excellent laser cutter processability.

Brief Description of Drawings

Fig. 1 is a graph illustrating a relationship between the amount of NaOH added dropwise to a slurry containing a fibrous cellulose having a phosphorus oxoacid group and pH.
Fig. 2 is a graph illustrating a relationship between the amount of NaOH added dropwise to a slurry containing a fibrous cellulose having a carboxy group and pH.

Description of Embodiments

Hereinafter, embodiments of the present invention will be described. Note that, in the present specification, "X to Y" indicating a numerical range means "X or more and Y or less". In the present specification, an upper limit and a lower limit of a numerical range can be arbitrarily combined.

[Laminate]

The laminate of the present embodiment includes: a fine fibrous cellulose-containing layer that contains a fine fibrous cellulose having a fiber width of 1 nm or more and 1,000 nm or less; and a cationic layer that is on at least one surface of the fine fibrous cellulose-containing layer and that contains a cationic compound.
The laminate of the present embodiment may have a cationic layer on a part of the surface of the fine fibrous cellulose-containing layer, or may have a cationic layer on the entire surface of the fine fibrous cellulose-containing layer.
In the laminate of the present embodiment, it is preferable that the fine fibrous cellulose-containing layer and the cationic layer are in contact with each other, that is, no other layer is present between the fine fibrous cellulose-containing layer and the cationic layer. The laminate of the present embodiment preferably has no layer on the cationic layer.
The laminate of the present embodiment is less susceptible to adherence of dirt such as dust, and has excellent laser cutter processability. The reason why the laminate of the present embodiment exhibits the above effect is not clear, but is considered as follows.
The laminate of the present embodiment can impart antistatic properties to at least one surface of the fine fibrous cellulose-containing layer by having the cationic layer. Although the detailed mechanism is unknown, it is considered that

particles generated at the time of cutting by the laser cutter processing are less likely to adhere to the processed portion by having the cationic layer, whereby the laminate has excellent laser cutter processability.

Furthermore, the present inventors have found that at least one of the total light transmittance, haze, tensile strength, tensile elastic modulus, linear thermal expansion coefficient, and water resistance is excellent as an additional effect of the sheet of the present embodiment.

Hereinafter, the present embodiment will be described in more detail. The components contained in the respective layers of the laminate of the present invention and the components that can be contained therein may be used singly, or two or more components may be used in combination. Each layer included in the laminate of the present embodiment may be a single layer or a multilayer. In the case of a multilayer, the components contained in respective layers constituting the multilayer and the components that can be contained therein may be the same as or different from each other.

[Fine fibrous cellulose-containing layer]

The fine fibrous cellulose-containing layer of the present embodiment contains a fine fibrous cellulose having a fiber width of 1 nm or more and 1,000 nm or less.

<Fine fibrous cellulose>

The fine fibrous cellulose is a fibrous cellulose having a fiber width of 1 nm or more and 1,000 nm or less. Note that the fiber width of the fibrous cellulose can be measured, for example, by electron microscopic observation.

The fiber width of the fine fibrous cellulose is 1 nm or more and 1,000 nm or less. The fiber width of the fine fibrous cellulose is, for example, preferably 2 nm or more and 1,000 nm or less, more preferably 2 nm or more and 100 nm or less, still more preferably 2 nm or more and 50 nm or less, and further still more preferably 2 nm or more and 10 nm or less. By setting the fiber width of the fine fibrous cellulose to 2 nm or more, it is possible to suppress dissolution of the fine fibrous cellulose in water as cellulose molecules and to more easily exhibit an effect of improving strength, rigidity, and dimensional stability by the fine fibrous cellulose.

The number average fiber width of the fine fibrous cellulose is, for example, 1 nm or more and 1,000 nm or less. The number average fiber width of the fine fibrous cellulose is preferably 2 nm or more and 1,000 nm or less, more preferably 2 nm or more and 100 nm or less, still more preferably 2 nm or more and 50 nm or less, and further still more preferably 2 nm or more and 10 nm or less. By setting the number average fiber width of the fine fibrous cellulose to 2 nm or more, it is possible to suppress dissolution of the fine fibrous cellulose in water as cellulose molecules and to more easily exhibit an effect of improving strength, rigidity, and dimensional stability by the fine fibrous cellulose. Note that the fine fibrous cellulose is, for example, a monofilamentous cellulose.

The number average fiber width of the fine fibrous cellulose is measured as follows using, for example, an electron microscope. First, an aqueous suspension of a fibrous cellulose having a concentration of 0.01% by mass or more and 0.1% by mass or less is prepared, and the suspension is cast onto a carbon membrane-coated grid subjected to a hydrophilization treatment to obtain a sample for transmission electron microscope (TEM) observation. When the fine fibrous cellulose includes a wide fiber, an SEM image on a surface of glass onto which the suspension has been cast may be observed. Next, observation with an electron microscope image is performed at a magnification of 1,000 times, 5,000 times, 10,000 times, or 50,000 times depending on the width of a fiber to be observed. Note that a sample, observation conditions, and magnification are adjusted so as to satisfy the following conditions.

(1) One straight line X is drawn at an arbitrary position in an observation image, and 20 or more fibers intersect the straight line X.

(2) A straight line Y perpendicularly intersecting the straight line X is drawn in the same image, and 20 or more fibers intersect the straight line Y.

For an observation image satisfying the above conditions, the width of a fiber intersecting the straight line X and the straight line Y is visually read. In this way, at least three or more sets of observation images of surface portions not overlapping each other are obtained. Next, for each image, the width of a fiber intersecting the straight line X and the straight line Y is read. As a result, the fiber widths of at least 20 fibers $\times$ 2 $\times$ 3 = 120 fibers are read. Then, an average value of the read fiber widths is defined as a number average fiber width of the fibrous cellulose.

The fiber length of the fine fibrous cellulose is not particularly limited, but is, for example, preferably 0.1 μm or more and 1,000 μm or less, more preferably 0.1 μm or more and 800 μm or less, and still more preferably 0.1 μm or more and 600 μm or less. By setting the fiber length within the above range, destruction of a crystal region of the fine fibrous cellulose can be suppressed. It is also possible to set a viscosity of a slurry of the fine fibrous cellulose within an appropriate range. Note that the fiber length of the fine fibrous cellulose can be determined by image analysis, for example, using a

TEM, a scanning electron microscope (SEM), or an atomic force microscope (AFM).

The fine fibrous cellulose preferably has a type I crystal structure. Here, the presence of the type I crystal structure of the fine fibrous cellulose can be identified in a diffraction profile which is obtained from a wide-angle X-ray diffraction photograph using CuKα (λ = 1.5418 Å) monochromatized with graphite. Specifically, the type I crystal structure can be identified by having typical peaks at two positions in the vicinity of 2θ = 14° or more and 17° or less and in the vicinity of 2θ = 22° or more and 23° or less.

The ratio of the type I crystal structure in the fine fibrous cellulose is, for example, preferably 30% or more, more preferably 40% or more, and still more preferably 50% or more. Thereby, a further excellent performance in terms of development of heat resistance and low linear thermal expansion coefficient can be expected. A crystallinity can be determined by a conventional method from a pattern of an X-ray diffraction profile which has been measured (Seagal et al., Textile Research Journal, vol. 29, p. 786, 1959).

The axial ratio (fiber length/fiber width) of the fine fibrous cellulose is not particularly limited, but is, for example, preferably 20 or more and 10,000 or less, and more preferably 50 or more and 1,000 or less. When the axial ratio is controlled to be not smaller than the above lower limit value, it becomes easy to form a sheet containing the fine fibrous cellulose. By setting the axial ratio to the above upper limit value or less, for example, when the fine fibrous cellulose is treated as a water dispersion, handling such as dilution is easily performed, which is preferable.

The fine fibrous cellulose in the present embodiment preferably has, for example, at least one of an ionic substituent and a nonionic substituent. From the viewpoint of improving the dispersibility of the fibers in the dispersion medium and increasing the defibration efficiency in the defibration treatment, the fine fibrous cellulose more preferably has an ionic substituent. Examples of the ionic substituent include one or both of an anionic group and a cationic group. Examples of the nonionic substituent include an alkyl group and an acyl group. In the present embodiment, the fine fibrous cellulose particularly preferably has an anionic group as an ionic substituent from the viewpoint of total light transmittance and haze. In addition, the ionic substituent is preferably a group introduced into the fine fibrous cellulose via an ester bond or an ether bond, and more preferably a group introduced into the fine fibrous cellulose via an ester bond. In this case, the ester bond is preferably formed through dehydration condensation of the fine fibrous cellulose and a compound serving as an ionic substituent.

Note that the fine fibrous cellulose may not be subjected to a treatment for introducing an ionic substituent.

Examples of the anionic group as the ionic substituent include a phosphorus oxoacid group or a substituent derived from a phosphorus oxoacid group (also simply referred to as a phosphorus oxoacid group), a carboxy group or a substituent derived from a carboxy group (also simply referred to as a carboxy group), a sulfur oxoacid group or a substituent derived from a sulfur oxoacid group (also simply referred to as a sulfur oxoacid group), a xanthate group or a substituent derived from a xanthate group (also simply referred to as a xanthate group), a phosphonate group or a substituent derived from a phosphonate group, a phosphine group or a substituent derived from a phosphine group, a sulfonic acid group or a substituent derived from a sulfonic acid group, and a carboxyalkyl group. Among them, the anionic group is preferably at least one selected from the group consisting of a phosphorus oxoacid group, a substituent derived from a phosphorus oxoacid group, a carboxy group, a carboxymethyl group, a carboxyethyl group, a sulfur oxoacid group and a sulfur oxoacid group, a xanthate group, and a substituent derived from a sulfonic acid group, more preferably at least one selected from the group consisting of a phosphorus oxoacid group, a substituent derived from a phosphorus oxoacid group, a carboxy group, a sulfur oxoacid group, a substituent derived from a sulfur oxoacid group, and a xanthate group, still more preferably at least one selected from the group consisting of a phosphorus oxoacid group, a substituent derived from a phosphorus oxoacid group, a carboxy group, a sulfur oxoacid group, and a substituent derived from a sulfur oxoacid group, and particularly preferably a phosphorus oxoacid group. By introducing the phosphorus oxoacid group as an anionic group, for example, the dispersibility of the fibrous cellulose can be further enhanced even under alkaline conditions or acidic conditions, and as a result, a highly strong and highly transparent fine fibrous cellulose-containing layer is easily obtained. Examples of the cationic group as the ionic substituent include an ammonium group, a phosphonium group, and a sulfonium group. Among them, the cationic group is preferably an ammonium group.

The phosphorus oxoacid group or the substituent derived from the phosphorus oxoacid group is, for example, a substituent represented by the following formula (1). A plurality of substituents represented by the following formula (1) may be introduced into the fine fibrous cellulose. In this case, a plurality of substituents represented by the following formula (1) to be introduced may be the same or different.

[Chemical Formula 1]

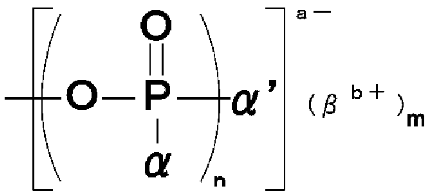

(1)

In the formula (1), a, b, and n are natural numbers, and m is any number (provided that a = b × m). At least one (preferably a) of n α and α' is $O^-$, and the remaining αs and α' are R or OR. Note that all αs and α' may be $O^-$. All n αs may be the same or different. $\beta^{b+}$ is a monovalent or higher valent cation formed of an organic substance or an inorganic substance.

Rs are each a hydrogen atom, a saturated-linear chain hydrocarbon group, a saturated-branched chain hydrocarbon group, a saturated-cyclic hydrocarbon group, an unsaturated-linear chain hydrocarbon group, an unsaturated-branched chain hydrocarbon group, an unsaturated-cyclic hydrocarbon group, an aromatic group, or a derivative group thereof. α in the formula (1) may be a group derived from a cellulose molecular chain. In the formula (1), n is preferably 1.

Examples of the saturated-linear chain hydrocarbon group include a methyl group, an ethyl group, a n-propyl group, and a n-butyl group, but are not particularly limited thereto. Examples of the saturated-branched chain hydrocarbon group include an i-propyl group and a t-butyl group, but are not particularly limited thereto. Examples of the saturated-cyclic hydrocarbon group include a cyclopentyl group and a cyclohexyl group, but are not particularly limited thereto. Examples of the unsaturated-linear chain hydrocarbon group include a vinyl group and an allyl group, but are not particularly limited thereto. Examples of the unsaturated-branched chain hydrocarbon group include an i-propenyl group and a 3-butenyl group, but are not particularly limited thereto. Examples of the unsaturated cyclic hydrocarbon group include a cyclopentenyl group and a cyclohexenyl group, but are not particularly limited thereto. Examples of the aromatic group include a phenyl group and a naphthyl group, but are not particularly limited thereto.

Examples of the derivative group in R include a functional group in a state in which at least one selected from functional groups such as a carboxy group, a carboxylate group ($-COO^-$), a hydroxy group, and an amino group is added to or substituted with a main chain or a side chain of each of the above various hydrocarbon groups, but are not particularly limited thereto. The number of carbon atoms constituting the main chain of R is not particularly limited, but is preferably 20 or less, and more preferably 10 or less. By setting the number of carbon atoms constituting the main chain of R within the above range, a molecular weight of the phosphorus oxoacid group can be set within an appropriate range, permeation into a fiber raw material can be facilitated, and a yield of the fine fibrous cellulose can be increased. Note that, when a plurality of Rs are present in the formula (1) or when a plurality of types of substituents represented by the formula (1) are introduced into the fine fibrous cellulose, the plurality of Rs may be the same or different.

$\beta^{b+}$ is a monovalent or higher valent cation formed of an organic substance or an inorganic substance. Examples of the monovalent or higher valent cation formed of an organic substance include an organic onium ion. Examples of the organic onium ion include an organic ammonium ion and an organic phosphonium ion. Examples of the organic ammonium ion include an aliphatic ammonium ion and an aromatic ammonium ion, and examples of the organic phosphonium ion include an aliphatic phosphonium ion and an aromatic phosphonium ion. Examples of the monovalent or higher valent cation formed of an inorganic substance include an ion of an alkali metal such as sodium, potassium, or lithium, an ion of a divalent metal such as calcium or magnesium, a hydrogen ion, and an ammonium ion, but are not particularly limited thereto. These can be applied singly or in combination of two or more thereof. Note that, when a plurality of $\beta^{b+}$s are present in the formula (1) or when a plurality of types of substituents represented by the formula (1) are introduced into the fine fibrous cellulose, the plurality of $\beta^{b+}$s may be the same or different. As the monovalent or higher valent cation formed of an organic substance or an inorganic substance, an ion of sodium or potassium which is less likely to turn yellow when the fiber raw material containing $\beta^{b+}$ is heated and which is industrially easily used is preferable, but the monovalent or higher valent cation is not particularly limited.

More specific examples of the phosphorus oxoacid group or the substituent derived from the phosphorus oxoacid group include a phosphate group ($-PO_3H_2$), a salt of a phosphate group, a phosphorous acid group (phosphonic acid group) ($-PO_2H_2$), and a salt of a phosphorous acid group (phosphonic acid group). In addition, the phosphorus oxoacid group or the substituent derived from the phosphorus oxoacid group may be a group in which a phosphate group is condensed (for example, a pyrophosphoric acid group), a group in which a phosphonic acid is condensed (for example, a polyphosphonic acid group), a phosphate ester group (for example, a monomethyl phosphate group or a polyoxyethylene alkyl phosphate group), and an alkyl phosphonate group (for example, a methyl phosphonate group).

The sulfur oxoacid group (the sulfur oxoacid group or the substituent derived from the sulfur oxoacid group) is, for example, a substituent represented by the following formula (2). A plurality of types of substituents represented by the following formula (2) may be introduced into the fine fibrous cellulose. In this case, a plurality of substituents represented by the following formula (2) to be introduced may be the same or different.

[Chemical Formula 2]

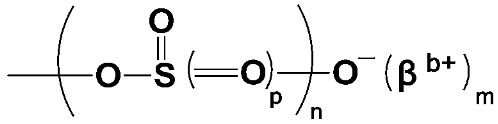

(2)

In the formula (2), b and n are natural numbers, p is 0 or 1, and m is any number (provided that 1 = b × m). When n is 2 or more, a plurality of ps may be the same number or different numbers. In the formula (2), $\beta^{b+}$ is a monovalent or higher valent cation formed of an organic substance or an inorganic substance. Examples of the monovalent or higher valent cation formed of an organic substance include an organic onium ion. Examples of the organic onium ion include an organic ammonium ion and an organic phosphonium ion. Examples of the organic ammonium ion include an aliphatic ammonium ion and an aromatic ammonium ion, and examples of the organic phosphonium ion include an aliphatic phosphonium ion and an aromatic phosphonium ion. Examples of the monovalent or higher valent cation formed of an inorganic substance include an ion of an alkali metal such as sodium, potassium, or lithium, an ion of a divalent metal such as calcium or magnesium, a hydrogen ion, and an ammonium ion. Note that, when a plurality of types of substituents represented by the formula (2) are introduced into the fine fibrous cellulose, the plurality of $\beta^{b+}$s may be the same or different. As the monovalent or higher valent cation formed of an organic substance or an inorganic substance, an ion of sodium or potassium which is less likely to turn yellow when the fiber raw material containing $\beta^{b+}$ is heated and which is industrially easily used is preferable, but the monovalent or higher valent cation is not particularly limited.

The amount of ionic substituents introduced into the fine fibrous cellulose is, for example, preferably 0.05 mmol/g or more and 5.20 mmol/g or less, more preferably 0.10 mmol/g or more, still more preferably 0.20 mmol/g or more, further still more preferably 0.50 mmol/g or more, and yet more preferably 1.00 mmol/g or more, and is more preferably 3.65 mmol/g or less, still more preferably 3.50 mmol/g or less, further still more preferably 3.00 mmol/g or less, yet more preferably 2.50 mmol/g or less, and still even more preferably 2.00 mmol/g or less per 1 g (mass) of the fine fibrous cellulose. By setting the amount of ionic substituents (preferably anionic groups) introduced within the above range, the fiber raw material can be easily refined, and the stability of the fine fibrous cellulose can be enhanced.

Here, the denominator in the unit mmol/g indicates the mass of the fine fibrous cellulose when the counter ion of the ionic substituent is a hydrogen ion ($H^+$).

In addition, the amount of ionic substituents (preferably anionic groups) introduced into the fine fibrous cellulose is preferably 0.01 mmol/g or more and less than 0.50 mmol/g, more preferably 0.40 mmol/g or less, still more preferably 0.30 mmol/g or less, further still more preferably 0.25 mmol/g or less, and yet more preferably 0.15 mmol/g or less, and more preferably 0.02 mmol/g or more and still more preferably 0.03 mmol/g or more per 1 g (mass) of the fine fibrous cellulose. The amount of ionic substituents (preferably anionic groups) introduced into the fine fibrous cellulose is preferably the above lower limit value or more from the viewpoint of the water resistance of the laminate, and is preferably the above upper limit value or less from the viewpoint of the total light transmittance and the haze of the laminate. Such a fine fibrous cellulose having a low amount of substituents may be obtained, for example, by undergoing a defibration treatment step and a substituent removal treatment step after an ionic substituent introduction step described later.

The amount of ionic substituents introduced into the fine fibrous cellulose can be measured by, for example, a neutralization titration method. In measurement by a neutralization titration method, a change in pH is determined while an alkali such as a sodium hydroxide aqueous solution is added to an obtained slurry containing the fine fibrous cellulose, whereby the amount of introduction is measured.

Fig. 1 is a graph illustrating a relationship between the amount of NaOH added dropwise to a slurry containing a fibrous cellulose having a phosphorus oxoacid group and pH. The amount of phosphorus oxoacid groups introduced into the fibrous cellulose can be measured, for example, as follows.

First, a slurry containing a fibrous cellulose is treated with a strongly acidic ion exchange resin. Note that, before the treatment with the strongly acidic ion exchange resin, a similar defibration treatment to a defibration treatment step described later may be performed on the measurement target as necessary.

Next, a change in pH is observed while a sodium hydroxide aqueous solution is added, and a titration curve as indicated in an upper part of Fig. 1 is obtained. In the titration curve indicated in the upper part of Fig. 1, a measured pH is plotted with respect to the amount of the alkali added, and in the titration curve indicated in a lower part of Fig. 1, an increment (differential value) (1/mmol) of a pH with respect to the amount of the alkali added is plotted. In this neutralization titration, two points at which the increment (differential value of a pH with respect to the amount of the alkali added dropwise) is maximum are confirmed in the curve obtained by plotting a measured pH with respect to the amount of the alkali added. Out of these points, a maximum point of the increment obtained first after addition of the alkali is referred to as a first end point, and a maximum point of the increment obtained next is referred to as a second end point. The alkali amount required from start of titration to the first end point is equal to a first dissociated acid amount of the fibrous cellulose contained in the slurry used for titration, the alkali amount required from the first end point to the second end point is equal to

a second dissociated acid amount of the fibrous cellulose contained in the slurry used for titration, and the alkali amount required from the start of titration to the second end point is equal to a total dissociated acid amount of the fibrous cellulose contained in the slurry used for titration. A value obtained by dividing the alkali amount required from the start of titration to the first end point by the solid content (g) in the slurry to be titrated is the amount of phosphorus oxoacid groups introduced (mmol/g). Note that the simple term "the amount of phosphorus oxoacid groups introduced (or the amount of phosphorus oxoacid groups)" refers to the first dissociated acid amount.

Note that, in Fig. 1, a region ranging from the start of titration to the first end point is referred to as a first region, and a region ranging from the first end point to the second end point is referred to as a second region. For example, when the phosphorus oxoacid group is a phosphate group and the phosphorus oxoacid group causes condensation, the amount of weakly acidic groups in the phosphorus oxoacid group (also referred to as the "second dissociated acid amount" in the present description) is apparently reduced, and the alkali amount required for the second region is decreased as compared with the alkali amount required for the first region. Meanwhile, the amount of strongly acidic groups in the phosphorus oxoacid group (also referred to as the "first dissociated acid amount" in the present description) coincides with the amount of phosphorus atoms regardless of presence or absence of condensation. When the phosphorus oxoacid group is a phosphorous acid group, since a weakly acidic group is not present in the phosphorus oxoacid group, the alkali amount required for the second region may be decreased, or the alkali amount required for the second region may be zero. In this case, in the titration curve, there is only one point at which the increment of a pH is maximum.

Note that the denominator of the above-described amount of phosphorus oxoacid groups introduced (mmol/g) indicates the mass of an acid type fibrous cellulose. Therefore, the amount of phosphorus oxoacid groups introduced (mmol/g) indicates the amount of phosphorus oxoacid groups of the acid type fibrous cellulose (hereinafter, referred to as "amount of phosphorus oxoacid groups (acid type)"). On the other hand, when the counter ion of the phosphorus oxoacid group is replaced with any cation C so as to achieve charge equivalent, the denominator is converted into the mass of a fibrous cellulose in which the cation C is the counter ion, whereby the amount of phosphorus oxoacid groups of the fibrous cellulose in which the cation C is the counter ion (hereinafter, referred to as "amount of phosphorus oxoacid groups (C type)") can be determined.

That is, the amount of phosphorus oxoacid groups (C type) is calculated by the following calculation formula.

Amount of phosphorus oxoacid groups (C type) = amount of phosphorus oxoacid groups (acid type)/{1 + (W - 1) × A/1,000}

A [mmol/g]: Total amount of anions derived from phosphorus oxoacid groups of fibrous cellulose (value obtained by adding the amount of strongly acidic groups and the amount of weakly acidic groups of phosphorus oxoacid groups)
W: Formula amount per valence of cation C (for example, Na is 23, and Al is 9.)

Fig. 2 is a graph illustrating a relationship between the amount of NaOH added dropwise to a fine fibrous cellulose having a carboxy group and pH.

The amount of carboxy groups introduced into the fine fibrous cellulose can be measured, for example, as follows.

First, a slurry containing a fine fibrous cellulose is treated with a strongly acidic ion exchange resin. Note that, before the treatment with the strongly acidic ion exchange resin, a similar defibration treatment to a defibration treatment step described later may be performed on the measurement target as necessary. Next, a change in pH is observed while a sodium hydroxide aqueous solution is added, and a titration curve as indicated in Fig. 2 is obtained. Note that, a similar defibration treatment to a defibration treatment step described later may be performed on the measurement target as necessary.

As illustrated in Fig. 2, in this neutralization titration, one point at which the increment (differential value of a pH with respect to the amount of the alkali added dropwise) is maximum is observed in the curve obtained by plotting a measured pH with respect to the amount of the alkali added. The maximum point of this increment is referred to as a first end point. Here, a region ranging from the start of titration to the first end point in Fig. 2 is referred to as a first region. The alkali amount required for the first region is equal to the amount of carboxy groups in the slurry used for titration. Then, the alkali amount (mmol) required for the first region of the titration curve was divided by the solid content (g) in the fine fibrous cellulose-containing slurry to be titrated, thereby calculating the amount of carboxy groups introduced (mmol/g).

The amount of carboxy groups introduced (mmol/g) indicates the amount of substituents per 1 g of the mass of the fibrous cellulose when the counter ion of the carboxy group is a hydrogen ion ($H^+$) (hereinafter, referred to as "amount of carboxy groups (acid type)").

Note that the denominator of the above-described amount of carboxy groups introduced (mmol/g) indicates the mass of an acid type fibrous cellulose. Therefore, the amount of carboxy groups introduced (mmol/g) indicates the amount

of carboxy groups of the acid type fibrous cellulose (hereinafter, referred to as "amount of carboxy groups (acid type)"). On the other hand, when the counter ion of the carboxy group is replaced with any cation C so as to achieve charge equivalent, the denominator is converted into the mass of a fibrous cellulose in which the cation C is the counter ion, whereby the amount of carboxy groups of the fibrous cellulose in which the cation C is the counter ion (hereinafter, referred to as "amount of carboxy groups (C type)") (mmol/g) can be determined.

That is, the amount of carboxy groups (C type) is calculated by the following calculation formula.

Amount of carboxy groups (C type) = amount of carboxy groups (acid type)/{1 + (W - 1) × (amount of carboxy groups (acid type))/1,000}

W: Formula amount per valence of cation C (for example, Na is 23, and Al is 9.)

Note that, in the measurement of the amount of substituents by the titration method, when the amount of a single droplet of a sodium hydroxide aqueous solution added dropwise is too large, or when a titration interval is too short, the amount of substituents may be measured to be lower than an actual value, and thus, a precise value cannot be obtained in some cases. As an appropriate amount added dropwise and an appropriate titration interval, for example, titration is desirably performed by dropwise adding 10 to 50 μL of a 0.1 N sodium hydroxide aqueous solution every 5 to 30 seconds. In addition, in order to eliminate an influence of carbon dioxide dissolved in the fibrous cellulose-containing slurry, for example, it is desirable to perform measurement while blowing an inert gas such as nitrogen gas into the slurry from 15 minutes before the start of titration to the end of titration.

The amount of sulfur oxoacid groups or sulfonic acid groups introduced into the fibrous cellulose can be calculated by freeze-drying the slurry containing a fibrous cellulose, further pulverizing the resultant, and measuring the amount of sulfur in the pulverized sample. Specifically, the slurry containing a fibrous cellulose is freeze-dried and pulverized, and the obtained sample is subjected to hydrothermal decomposition using nitric acid in a sealed container and then appropriately diluted, and the amount of sulfur is measured by ICP-OES. The value calculated by dividing the amount of sulfur by the absolute dry mass of the fibrous cellulose supplied to a test is taken as the amount of sulfur oxoacid groups or the amount of sulfonic acid groups of the fibrous cellulose (unit: mmol/g) .

<<Method for producing fine fibrous cellulose>>

(Cellulose-containing fiber raw material)

The fine fibrous cellulose is produced from a cellulose-containing fiber raw material.

The cellulose-containing fiber raw material is not particularly limited, but it is preferable to use pulp from the viewpoint of being easily available and inexpensive. Examples of the pulp include a wood pulp, a non-wood pulp, and a deinked pulp. The wood pulp is not particularly limited, but examples thereof include: chemical pulps such as hardwood kraft pulp (LBKP), softwood kraft pulp (NBKP), sulfite pulp (SP), dissolving pulp (DP), soda pulp (AP), unbleached kraft pulp (UKP), and oxygen-bleached kraft pulp (OKP); semi-chemical pulps such as semi-chemical pulp (SCP) and chemigroundwood pulp (CGP); and mechanical pulps such as ground wood pulp (GP) and thermomechanical pulp (TMP and BCTMP). The non-wood pulp is not particularly limited, but examples thereof include: cotton-based pulps such as cotton linter and cotton lint; and non-wood based pulps such as hemp, wheat straw and bagasse. The deinked pulp is not particularly limited, but examples thereof include a deinked pulp of which the raw material is waste paper. As the pulp of the present embodiment, one of the above pulps may be used singly, or two or more thereof may be used in combination.

Among the above pulps, for example, wood pulp and deinked pulp are preferable from the viewpoint of availability. Among the wood pulps, for example, chemical pulp is more preferable, and kraft pulp and sulfite pulp are further preferable, from the viewpoint that a cellulose ratio is high, and a yield of fine fibrous cellulose at the time of defibration treatment is high, and from the viewpoint that fine fibrous cellulose having long fibers is obtained, in which decomposition of cellulose in pulp is low and the axial ratio is high. When fine fibrous cellulose of long fibers having a large axial ratio is used, the viscosity tends to increase.

As the cellulose-containing fiber raw material, it is also possible to use, for example, cellulose contained in ascidians, or bacterial cellulose produced by acetic acid bacteria.

It is also possible to employ the fiber which is formed by a linear chain type nitrogen-containing polysaccharide polymer such as chitin or chitosan, in place of the cellulose-containing fiber raw material.

In order to obtain the above-described fine fibrous cellulose having an ionic substituent introduced thereinto, an ionic substituent introduction step of introducing an ionic substituent into the above-described cellulose-containing fiber raw material, a washing step, an alkali treatment step (neutralization step), and a defibration treatment step are preferably included in this order, and an acid treatment step may be included instead of or in addition to the washing step. Examples of the ionic substituent introduction step include a phosphorus oxoacid group introduction step, a carboxy group introduction step, a sulfur oxoacid group introduction step, a xanthate group introduction step, a phosphonate group or phosphine

group introduction step, a sulfonic acid group introduction step, and a cationic group introduction step. Each step will be described below.

(Ionic substituent introduction step)

-Phosphorus oxoacid group introduction step-

The phosphorus oxoacid group introduction step is a step of allowing at least one compound (hereinafter, also referred to as "compound A") selected from compounds capable of introducing a phosphorus oxoacid group to act on a cellulose-containing fiber raw material by a reaction between the compound A and a hydroxy group of the cellulose-containing fiber raw material. By this step, a phosphorus oxoacid group-introduced fiber is obtained.

In the phosphorus oxoacid group introduction step according to the present embodiment, the reaction between the cellulose-containing fiber raw material and the compound A may be performed in the presence of at least one selected from urea and derivatives thereof (hereinafter, also referred to as "compound B"). On the other hand, the reaction between the cellulose-containing fiber raw material and the compound A may be performed in the absence of the compound B.

An example of a method for allowing the compound A to act on the fiber raw material in the coexistence with the compound B is a method for mixing the compound A and the compound B with the fiber raw material in a dry state, a wet state, or a slurry state. Among these, it is preferable to use the fiber raw material in a dry state or a wet state, and it is particularly preferable to use the fiber raw material in a dry state because uniformity of the reaction is high. The form of the fiber raw material is not particularly limited, but is preferably, for example, a cotton form or a thin sheet form. Examples of the method include a method for adding the compound A and the compound B to the fiber raw material while each of the compound A and the compound B is in a powder form, is in a solution form in which the compound A and the compound B are dissolved in a solvent, or is in a melted state by being heated to a melting point or higher. Among these, it is preferable to add the compound A and the compound B in a solution form in which the compound A and the compound B are dissolved in a solvent, particularly in an aqueous solution state because uniformity of the reaction is high. In addition, the compound A and the compound B may be simultaneously added to the fiber raw material, may be separately added, or may be added as a mixture. A method for adding the compound A and the compound B is not particularly limited, but when each of the compound A and the compound B is in a form of a solution, the fiber raw material may be immersed in the solution to absorb liquid, and then taken out, or the solution may be added dropwise to the fiber raw material. In addition, required amounts of the compound A and the compound B may be added to the fiber raw material, or excess amounts of the compound A and the compound B may be added to the fiber raw material, and then surplus amounts of the compound A and the compound B may be removed by compression or filtration.

The compound A used in the present embodiment only needs to be a compound having a phosphorus atom and capable of forming an ester bond with a cellulose, and examples thereof include phosphoric acid or a salt thereof, phosphorous acid or a salt thereof, dehydration-condensed phosphoric acid or a salt thereof, and phosphoric anhydride (diphosphorus pentoxide), but are not particularly limited thereto. As the phosphoric acid, phosphoric acids having various purities can be used, and for example, 100% phosphoric acid (orthophosphoric acid) or 85% phosphoric acid can be used. Examples of the phosphorous acid include 99% phosphorous acid (phosphonic acid). The dehydration-condensed phosphoric acid is obtained by condensing two or more molecules of phosphoric acid by a dehydration reaction, and examples thereof include pyrophosphoric acid and polyphosphoric acid. Examples of the phosphate, phosphite, and dehydration-condensed phosphate include a lithium salt, a sodium salt, a potassium salt, and an ammonium salt of phosphoric acid, phosphorous acid, or dehydration-condensed phosphoric acid, and these can have various degrees of neutralization.

Among them, phosphoric acid, a sodium salt of phosphoric acid, a potassium salt of phosphoric acid, or an ammonium salt of phosphoric acid is preferable, and phosphoric acid, sodium dihydrogen phosphate, disodium hydrogen phosphate, or ammonium dihydrogen phosphate is more preferable from the viewpoint of high introduction efficiency of the phosphorus oxoacid group, easiness of further improving defibration efficiency in the defibration step described later, lower cost, and easy industrial application.

The amount of the compound A added to the fiber raw material is not particularly limited, but for example, when the amount of the compound A added is converted into the amount of phosphorus atoms, the amount of phosphorus atom added to 100 parts by mass of the fiber raw material (absolute dry mass) is preferably 0.5 parts by mass or more and 100 parts by mass or less, more preferably 1 part by mass or more and 50 parts by mass or less, and still more preferably 2 parts by mass or more and 30 parts by mass or less. By setting the amount of phosphorus atoms added to the fiber raw material within the above range, a yield of the fine fibrous cellulose can be further improved. On the other hand, by setting the amount of phosphorus atoms added to the fiber raw material to the above upper limit value or less, an effect of improving the yield and cost can be balanced.

The compound B used in the present embodiment is at least one selected from urea and derivatives thereof as described above. Examples of the compound B include urea, biuret, 1-phenylurea, 1-benzylurea, 1-methylurea, and 1-ethylurea.

The compound B is preferably used as an aqueous solution from the viewpoint of improving uniformity of the reaction. In addition, it is preferable to use an aqueous solution in which both the compound A and the compound B are dissolved from a viewpoint of further improving the uniformity of the reaction.

The amount of the compound B added to 100 parts by mass of the fiber raw material (absolute dry mass) is not particularly limited, but is, for example, preferably 1 part by mass or more and 500 parts by mass or less, more preferably 10 parts by mass or more and 400 parts by mass or less, and still more preferably 100 parts by mass or more and 350 parts by mass or less.

In the reaction between the cellulose-containing fiber raw material and the compound A, for example, amides or amines may be included in the reaction system in addition to the compound B. Examples of the amides include formamide, dimethylformamide, acetamide, and dimethylacetamide. Examples of the amines include methylamine, ethylamine, trimethylamine, triethylamine, monoethanolamine, diethanolamine, triethanolamine, pyridine, ethylenediamine, and hexamethylenediamine. Among these, particularly triethylamine is known to act as a favorable reaction catalyst.

In the phosphorus oxoacid group introduction step, it is preferable to add or mix the compound A and the like to the fiber raw material, and then to subject the fiber raw material to a heat treatment. As a heat treatment temperature, it is preferable to select a temperature at which a phosphorus oxoacid group can be efficiently introduced while suppressing thermal decomposition and a hydrolysis reaction of a fiber. The heat treatment temperature is, for example, preferably 50°C or higher and 300°C or lower, more preferably 100°C or higher and 250°C or lower, and still more preferably 130°C or higher and 200°C or lower. In the heat treatment, various devices having heat media can be used, and for example, a stirring and drying device, a rotary drying device, a disk drying device, a roll type heating device, a plate type heating device, a fluidized bed drying device, a band type drying device, a filtration drying device, a vibration fluidizing drying device, an airflow drying device, a reduced pressure drying device, an infrared heating device, a far infrared heating device, a microwave heating device, or a high frequency drying device can be used.

In the heat treatment according to the present embodiment, for example, a method for adding the compound A to a thin sheet-shaped fiber raw material by a method such as impregnation and then heating the mixture or a method for heating the fiber raw material and the compound A while kneading or stirring the fiber raw material and the compound A with a kneader or the like can be adopted. This makes it possible to suppress concentration unevenness of the compound A in the fiber raw material and to more uniformly introduce a phosphorus oxoacid group to a surface of a cellulose fiber contained in the fiber raw material. This is considered to be because it is possible to suppress attraction of the dissolved compound A to water molecules by surface tension and movement of the compound A to the surface of the fiber raw material in a similar manner (that is, occurrence of concentration unevenness of the compound A) when the water molecules move to the surface of the fiber raw material along with drying.

In addition, the heating device used for the heat treatment is preferably a device capable of constantly discharging moisture retained by a slurry and moisture generated in association with a dehydration condensation (phosphoric acid esterification) reaction between the compound A and a hydroxy group or the like contained in a cellulose or the like in the fiber raw material to the outside of the device system. Examples of such a heating device include an air blowing type oven. By constantly discharging moisture in the device system, it is possible to suppress a hydrolysis reaction of a phosphoric acid ester bond, which is a reverse reaction of phosphoric acid esterification, and it is also possible to suppress acid hydrolysis of a sugar chain in the fiber. Therefore, it is possible to obtain a fine fibrous cellulose having a high axial ratio.

The time for the heat treatment is, for example, preferably 1 second or more and 300 minutes or less, more preferably 1 second or more and 1,000 seconds or less, still more preferably 10 seconds or more and 800 seconds or less after moisture is substantially removed from the fiber raw material. In the present embodiment, by setting the heating temperature and the heating time within appropriate ranges, the amount of phosphorus oxoacid groups introduced can be set within a preferable range.

The amount of phosphorus oxoacid groups introduced into the fiber raw material is, for example, preferably 0.05 mmol/g or more and 5.20 mmol/g or less, more preferably 0.10 mmol/g or more and 0.20 mmol/g or more, still more preferably 0.50 mmol/g or more and further still more preferably 1.00 mmol/g or more, and is more preferably 3.65 mmol/g or less and still more preferably 3.00 mmol/g or less per 1 g (mass) of the fine fibrous cellulose. By setting the amount of phosphorus oxoacid groups introduced within the above range, the fiber raw material can be easily refined, and the stability of the fine fibrous cellulose can be enhanced.

In addition, the amount of phosphorus oxoacid groups introduced into the fine fibrous cellulose is preferably 0.01 mmol/g or more and less than 0.50 mmol/g, more preferably 0.40 mmol/g or less, still more preferably 0.30 mmol/g or less, further still more preferably 0.25 mmol/g or less, and yet more preferably 0.15 mmol/g or less, and is more preferably 0.02 mmol/g or more and still more preferably 0.03 mmol/g or more per 1 g (mass) of the fine fibrous cellulose. The amount of phosphorus oxoacid groups introduced into the fine fibrous cellulose is preferably the above lower limit value or more from the viewpoint of the water resistance of the laminate, and is preferably the above upper limit value or less from the viewpoint of the total light transmittance and the haze of the laminate. Such a fine fibrous cellulose having a low amount of

substituents may be obtained, for example, by undergoing a defibration treatment step and a substituent removal treatment step after an ionic substituent introduction step described later.

-Carboxy group introduction step-

The carboxy group introduction step is performed by subjecting a cellulose-containing fiber raw material to an oxidation treatment such as ozone oxidation, oxidation by a Fenton process, or a TEMPO oxidation treatment, or a treatment with a compound having a carboxylic acid-derived group or derivatives thereof or an acid anhydride of a compound having a carboxylic acid-derived group or derivatives thereof.

The compound having a carboxylic acid-derived group is not particularly limited, and examples thereof include dicarboxylic acid compounds such as maleic acid, succinic acid, phthalic acid, fumaric acid, glutaric acid, adipic acid, and itaconic acid, and tricarboxylic acid compounds such as citric acid and aconitic acid. The derivative of the compound having a carboxylic acid-derived group is not particularly limited, and examples thereof include an imidized form of an acid anhydride of a compound having a carboxy group and a derivative of an acid anhydride of a compound having a carboxy group. The imidized form of an acid anhydride of a compound having a carboxy group is not particularly limited, and examples thereof include imidized forms of dicarboxylic acid compounds, such as maleimide, succinimide, and phthalimide.

The acid anhydride of a compound having a carboxylic acid-derived group is not particularly limited, and examples thereof include acid anhydrides of dicarboxylic acid compounds, such as maleic anhydride, succinic anhydride, phthalic anhydride, glutaric anhydride, adipic anhydride, and itaconic anhydride. In addition, the derivative of an acid anhydride of a compound having a carboxylic acid-derived group is not particularly limited, and examples thereof include those in which at least some hydrogen atoms of an acid anhydride of a compound having a carboxy group are substituted with a substituent such as an alkyl group or a phenyl group, such as dimethylmaleic anhydride, diethylmaleic anhydride, and diphenylmaleic anhydride.

When the TEMPO oxidation treatment is performed in the carboxy group introduction step, for example, the treatment is preferably performed under the condition of a pH of 6 or more and 8 or less. Such a treatment is also referred to as a neutral TEMPO oxidation treatment. The neutral TEMPO oxidation treatment can be performed, for example, by adding pulp as a fiber raw material, nitroxy radicals such as TEMPO (2,2,6,6-tetramethylpiperidine-1-oxyl) as a catalyst, and sodium hypochlorite as a sacrificial reagent to a sodium phosphate buffer solution (pH = 6.8). Furthermore, sodium chlorite is allowed to coexist in the reaction system, whereby aldehyde generated in the process of oxidation can be efficiently oxidized to a carboxy group.

The TEMPO oxidation treatment may also be performed under the condition of a pH of 10 or more and 11 or less. Such a treatment is also referred to as an alkali TEMPO oxidation treatment. The alkali TEMPO oxidation treatment can be performed, for example, by adding nitroxy radicals such as TEMPO as a catalyst, sodium bromide as a cocatalyst, and sodium hypochlorite as an oxidizing agent to pulp as a fiber raw material.

The amount of carboxy groups introduced into the fiber raw material varies depending on the type of the substituent, but for example, when the carboxy group is introduced by TEMPO oxidation, the amount of carboxy groups introduced is preferably 0.05 mmol/g or more and 3.65 mmol/g or less, more preferably 0.10 mmol/g or more, still more preferably 0.20 mmol/g or more, further still more preferably 0.50 mmol/g or more, and yet more preferably 0.90 mmol/g or more, and is more preferably 3.00 mmol/g or less, still more preferably 2.50 mmol/g or less, further still more preferably 2.20 mmol/g or less, and yet more preferably 2.00 mmol/g or less per 1 g (mass) of the fine fibrous cellulose. In addition, when the substituent is a carboxymethyl group, the amount of carboxy groups introduced may be 5.8 mmol/g or less per 1 g (mass) of the fine fibrous cellulose. By setting the amount of carboxy groups introduced within the above range, it is possible to facilitate the refinement of the cellulose fiber in the refinement treatment step and to enhance the stability of the fine fibrous cellulose.

-Sulfur oxoacid group introduction step-

The production process of the fine fibrous cellulose may include, for example, a sulfur oxoacid group introduction step as the ionic substituent introduction step. In the sulfur oxoacid group introduction step, a hydroxyl group of the cellulose-containing fiber raw material reacts with a sulfur oxoacid to obtain a cellulose fiber (sulfur oxoacid group-introduced fiber) having a sulfur oxoacid group.

In the sulfur oxoacid group introduction step, at least one compound (hereinafter, also referred to as "compound C") selected from compounds capable of introducing a sulfur oxoacid group by a reaction between the compound C and a hydroxyl group of the cellulose-containing fiber raw material is used instead of the compound A in <Phosphorus oxoacid group introduction step> described above. The compound C may be any compound having sulfur atoms and capable of forming an ester bond with cellulose, and examples thereof include, but are not particularly limited to, sulfuric acid or a salt thereof, sulfurous acid or a salt thereof, and amidosulfuric acid. As the sulfuric acid, sulfuric acids having various purities

can be used, and for example, 96% sulfuric acid (concentrated sulfuric acid) can be used. Examples of the sulfurous acid include 5% sulfurous acid solution. Examples of the sulfate or sulfite include a lithium salt, a sodium salt, a potassium salt, and an ammonium salt of a sulfate or sulfite, and these can have various degrees of neutralization. As the amidosulfuric acid, sulfamic acid or the like can be used. In the sulfur oxoacid group introduction step, the compound B in <Phosphorus oxoacid group introduction step> described above is preferably used in the same manner.

In the sulfur oxoacid group introduction step, it is preferable that an aqueous solution containing a sulfur oxoacid and urea and/or derivatives of urea is mixed with the cellulose raw material, and then the cellulose raw material is subjected to a heat treatment. As a heat treatment temperature, it is preferable to select a temperature at which a sulfur oxoacid group can be efficiently introduced while suppressing thermal decomposition and a hydrolysis reaction of a fiber. The heat treatment temperature is preferably 100°C or higher and 300°C or lower, more preferably 120°C or higher and still more preferably 150°C or higher, and more preferably 250°C or lower and still more preferably 200°C or lower.

In the heat treatment step, heating is preferably performed until moisture is substantially removed. Therefore, the heat treatment time varies depending on the amount of water contained in the cellulose raw material and the amount of the aqueous solution containing the sulfur oxoacid and urea and/or derivatives of urea added, but is preferably, for example, 10 seconds or more and 10,000 seconds or less. In the heat treatment, various devices having heat media can be used, and for example, a stirring and drying device, a rotary drying device, a disk drying device, a roll type heating device, a plate type heating device, a fluidized bed drying device, a band type drying device, a filtration drying device, a vibration fluidizing drying device, an airflow drying device, a reduced pressure drying device, an infrared heating device, a far infrared heating device, a microwave heating device, or a high frequency drying device can be used.

The amount of sulfur oxoacid groups introduced into the fiber raw material is preferably 0.05 mmol/g or more and 5.00 mmol/g or less, more preferably 0.10 mmol/g or more, still more preferably 0.20 mmol/g or more, further still more preferably 0.50 mmol/g or more, yet more preferably 0.90 mmol/g or more, and more preferably 3.00 mmol/g or less. By setting the amount of sulfur oxoacid groups introduced within the above range, the fiber raw material can be easily refined, and the stability of the fibrous cellulose can be enhanced.

In addition, the amount of sulfur oxoacid groups introduced into the fine fibrous cellulose is preferably 0.01 mmol/g or more and less than 0.50 mmol/g, more preferably 0.40 mmol/g or less, still more preferably 0.30 mmol/g or less, further still more preferably 0.25 mmol/g or less, and yet more preferably 0.15 mmol/g or less, and is more preferably 0.02 mmol/g or more and still more preferably 0.03 mmol/g or more per 1 g (mass) of the fine fibrous cellulose. The amount of sulfur oxoacid groups introduced into the fine fibrous cellulose is preferably the above lower limit value or more from the viewpoint of the water resistance of the laminate, and is preferably the above upper limit value or less from the viewpoint of the total light transmittance and the haze of the laminate. Such a fine fibrous cellulose having a low amount of substituents may be obtained, for example, by subjecting the fine fibrous cellulose to a treatment described later for removing substituents.

-Oxidation step with chlorine-based oxidizing agent (second carboxy group introduction step)-

The ionic substituent introduction step may include an oxidation step with a chlorine-based oxidizing agent. In the oxidation step with a chlorine-based oxidizing agent, a carboxy group is introduced into the fiber raw material by adding the chlorine-based oxidizing agent to the fiber raw material having a hydroxy group in a wet state or a dry state to perform a reaction.

Examples of the chlorine-based oxidizing agent include hypochlorous acid, hypochlorite, chlorous acid, chlorite, chloric acid, chlorate, perchloric acid, perchlorate, and chlorine dioxide. The chlorine-based oxidizing agent is preferably sodium hypochlorite, sodium chlorite, or chlorine dioxide from the viewpoint of introduction efficiency of the substituent, and further, defibration efficiency, cost, and ease of handling. When the chlorine-based oxidizing agent is added, the chlorine-based oxidizing agent may be added to the fiber raw material as it is as a reagent (in a solid form or liquid form), or may be added by being dissolved in an appropriate solvent.

The concentration of the chlorine-based oxidizing agent in the solution in the oxidation step with a chlorine-based oxidizing agent is, for example, preferably 1% by mass or more and 1,000% by mass or less, more preferably 5% by mass or more and 500% by mass or less, and still more preferably 10% by mass or more and 100% by mass or less in terms of the effective chlorine concentration. The amount of the chlorine-based oxidizing agent added to 100 parts by mass of the fiber raw material is preferably 1 part by mass or more and 100,000 parts by mass or less, more preferably 10 parts by mass or more and 10,000 parts by mass or less, and still more preferably 100 parts by mass or more and 5,000 parts by mass or less.

The reaction time with the chlorine-based oxidizing agent in the oxidation step with a chlorine-based oxidizing agent may vary depending on the reaction temperature, and is, for example, preferably 1 minute or more and 1,000 minutes or less, more preferably 10 minutes or more and 500 minutes or less, and still more preferably 20 minutes or more and 400 minutes or less. The pH during the reaction is preferably 5 or more and 15 or less, more preferably 7 or more and 14 or less, and still more preferably 9 or more and 13 or less. In addition, at the start of the reaction, it is preferable to keep the

pH during the reaction constant (for example, pH 11) while appropriately adding hydrochloric acid or sodium hydroxide. After the reaction, excess reaction reagents, by-products, and the like may be washed with water, and removed by filtration or the like.

-Xanthate group introduction step (xanthic acid esterification step)-

The ionic substituent introduction step may include, for example, a xanthate group introduction step (hereinafter, also referred to as "xanthation step"). In the xanthation step, a xanthate group is introduced into the fiber raw material by adding carbon disulfide and an alkali compound to the fiber raw material having a hydroxyl group in a wet state or a dry state to perform a reaction. Specifically, carbon disulfide is added to the fiber raw material which has been converted into alkali cellulose by the method described later, and the reaction is performed.

((Alkali cellulose conversion))

When an ionic substituent is introduced into the fiber raw material, it is preferable that an alkaline solution is allowed to act on a cellulose contained in the fiber raw material to convert the cellulose into alkali cellulose. By this treatment, some of the hydroxy groups of the cellulose are ionically dissociated, and nucleophilicity (reactivity) can be enhanced. An alkali compound contained in the alkaline solution is not particularly limited, and may be an inorganic alkali compound or an organic alkali compound. For example, sodium hydroxide, potassium hydroxide, tetraethylammonium hydroxide, or tetrabutylammonium hydroxide is preferably used because of high versatility. The alkali cellulose conversion may be performed simultaneously with introduction of the ionic substituent, may be performed as a preceding stage thereof, or may be performed at both timings.

The solution temperature at the start of the alkali cellulose conversion is preferably 0°C or higher and 50°C or lower, more preferably 5°C or higher and 40°C or lower, and still more preferably 10°C or higher and 30°C or lower.

The alkali concentration in the alkaline solution is preferably 0.01 mol/L or more and 4 mol/L or less, more preferably 0.1 mol/L or more and 3 mol/L or less, and still more preferably 1 mol/L or more and 2.5 mol/L or less in terms of molar concentration. In particular, when the treatment temperature in the alkali cellulose conversion is lower than 10°C, the alkali concentration is preferably 1 mol/L or more and 2 mol/L or less.

The treatment time for the alkali cellulose conversion is preferably 1 minute or more and 6 hours or less, more preferably 10 minutes or more, still more preferably 30 minutes or more, and more preferably 5 hours or less, still more preferably 4 hours or less.

By adjusting the type, treatment temperature, concentration, and immersion time of the alkaline solution as described above, it is possible to suppress permeation of the alkaline solution into a crystal region of a cellulose, to easily maintain a cellulose type I crystal structure, and to increase a yield of the fine fibrous cellulose.

When the introduction of the ionic substituent and the alkali cellulose conversion are not simultaneously performed, the alkali cellulose conversion is preferably performed before the introduction of the ionic substituent. In this case, the alkali cellulose obtained by the alkali cellulose conversion treatment is preferably subjected to solid-liquid separation by a general liquid removing method such as centrifugation or filtration to remove moisture. This improves reaction efficiency in the ionic substituent introduction step to be performed next. The cellulose fiber concentration after solid-liquid separation is preferably 5% or more and 50% or less, more preferably 10% or more and 40% or less, and still more preferably 15% or more and 35% or less.

-Phosphonate group or phosphine group introduction step (phosphoalkylation step)-

The ionic substituent introduction step may include a phosphonate group or phosphine group introduction step (phosphoalkylation step). In the phosphoalkylation step, a phosphonate group or a phosphine group is introduced into the fiber raw material by adding a compound having a reactive group and a phospho group or a phosphine group (compound $E_A$) as an essential component, an alkali compound, and the above compound B selected from urea and derivatives thereof as optional components to the fiber raw material having a hydroxy group in a wet state or a dry state to perform a reaction.

Examples of the reactive group include a halogenated alkyl group, a vinyl group, and an epoxy group (glycidyl group).

Examples of the compound $E_A$ include vinylphosphonic acid, phenylvinylphosphonic acid, and phenylvinylphosphinic acid. The compound $E_A$ is preferably vinylphosphonic acid from the viewpoint of introduction efficiency of the substituent, and further, defibration efficiency, cost, and ease of handling.

Furthermore, as an optional component, it is also preferable to use the compound B in <Phosphorus oxoacid group introduction step> described above in the same manner, and the amount added is also preferably as described above.

When the compound $E_A$ is added, the compound $E_A$ may be added to the fiber raw material as it is as a reagent (in a solid form or liquid form), or may be added by being dissolved in an appropriate solvent. The fiber raw material is preferably converted into alkali cellulose in advance or simultaneously with the reaction. The method of the alkali cellulose conversion is as described above.
The temperature during the reaction is, for example, preferably 50°C or higher and 300°C or lower, more preferably 100°C or higher and 250°C or lower, and still more preferably 130°C or higher and 200°C or lower.
The amount of the compound $E_A$ added to 100 parts by mass of the fiber raw material is preferably 1 part by mass or more and 100,000 parts by mass or less, more preferably 2 parts by mass or more and 10,000 parts by mass or less, and still more preferably 5 parts by mass or more and 1,000 parts by mass or less.
The reaction time may vary depending on the reaction temperature, and is, for example, preferably 1 minute or more and 1,000 minutes or less, more preferably 10 minutes or more and 500 minutes or less, and still more preferably 20 minutes or more and 400 minutes or less. After the reaction, excess reaction reagents, by-products, and the like may be washed with water, and removed by filtration or the like.

-Sulfonic acid group introduction step (sulfoalkylation step)-

The ionic substituent introduction step may include a sulfonic acid group introduction step (sulfoalkylation step). In the sulfoalkylation, a sulfonic acid group is introduced into the fiber raw material by adding a compound having a reactive group and a sulfonic acid group (compound $E_B$) as an essential component, an alkali compound, and the above compound B selected from urea and derivatives thereof as optional components to the fiber raw material having a hydroxy group in a wet state or a dry state to perform a reaction.
Examples of the reactive group include a halogenated alkyl group, a vinyl group, and an epoxy group (glycidyl group).
Examples of the compound $E_B$ include sodium 2-chloroethanesulfonate, sodium vinylsulfonate, sodium p-styrenesulfonate, and 2-acrylamide-2-methylpropanesulfonic acid. Among them, the compound $E_B$ is preferably sodium vinylsulfonate from the viewpoint of introduction efficiency of the substituent, and further, defibration efficiency, cost, and ease of handling.
Furthermore, as an optional component, it is also preferable to use the compound B in <Phosphorus oxoacid group introduction step> described above in the same manner, and the amount added is also preferably as described above.
When the compound $E_B$ is added, the compound $E_B$ may be added to the fiber raw material as it is as a reagent (in a solid form or liquid form), or may be added by being dissolved in an appropriate solvent. The fiber raw material is preferably converted into alkali cellulose in advance or simultaneously with the reaction. The method of the alkali cellulose conversion is as described above.
The temperature during the reaction is, for example, preferably 50°C or higher and 300°C or lower, more preferably 100°C or higher and 250°C or lower, and still more preferably 130°C or higher and 200°C or lower.
The amount of the compound $E_B$ added to 100 parts by mass of the fiber raw material is preferably 1 part by mass or more and 100,000 parts by mass or less, more preferably 2 parts by mass or more and 10,000 parts by mass or less, and still more preferably 5 parts by mass or more and 1,000 parts by mass or less.
The reaction time may vary depending on the reaction temperature, and is, for example, preferably 1 minute or more and 1,000 minutes or less, more preferably 10 minutes or more and 500 minutes or less, and still more preferably 15 minutes or more and 400 minutes or less. After the reaction, excess reaction reagents, by-products, and the like may be washed with water, and removed by filtration or the like.

-Carboxyalkylation step (third carboxy group introduction step)-

The ionic substituent introduction step may include a carboxyalkylation step. A carboxy group is introduced into the fiber raw material by adding a compound having a reactive group and a carboxy group (compound $E_C$) as an essential component, an alkali compound, and the above compound B selected from urea and derivatives thereof as optional components to the fiber raw material having a hydroxy group in a wet state or a dry state to perform a reaction.
Examples of the reactive group include a halogenated alkyl group, a vinyl group, and an epoxy group (glycidyl group) .
The compound $E_C$ is preferably monochloroacetic acid, sodium monochloroacetate, 2-chloropropionic acid, 3-chloropropionic acid, sodium 2-chloropropionate, and sodium 3-chloropropionate from the viewpoint of introduction efficiency of the substituent, and further, defibration efficiency, cost, and ease of handling.
Furthermore, as an optional component, it is also preferable to use the compound B in <Phosphorus oxoacid group introduction step> described above in the same manner, and the amount added is also preferably as described above.

When the compound $E_C$ is added, the compound $E_C$ may be added to the fiber raw material as it is as a reagent (in a solid form or liquid form), or may be added by being dissolved in an appropriate solvent. The fiber raw material is preferably converted into alkali cellulose in advance or simultaneously with the reaction. The method of the alkali cellulose conversion is as described above.
The temperature during the reaction is, for example, preferably 50°C or higher and 300°C or lower, more preferably 100°C or higher and 250°C or lower, and still more preferably 130°C or higher and 200°C or lower.
The amount of the compound $E_C$ added to 100 parts by mass of the fiber raw material is preferably 1 part by mass or more and 100,000 parts by mass or less, more preferably 2 parts by mass or more and 10,000 parts by mass or less, and still more preferably 5 parts by mass or more and 1,000 parts by mass or less.
The reaction time may vary depending on the reaction temperature, and is, for example, preferably 1 minute or more and 1,000 minutes or less, more preferably 3 minutes or more and 500 minutes or less, and still more preferably 5 minutes or more and 400 minutes or less. After the reaction, excess reaction reagents, by-products, and the like may be washed with water, and removed by filtration or the like.

-Cationic group introduction step (cationization step)-

A cationic group is introduced into the fiber raw material by adding a compound having a reactive group and a cationic group (compound $E_D$) as an essential component, an alkali compound, and the above compound B selected from urea and derivatives thereof as optional components to the fiber raw material having a hydroxy group in a wet state or a dry state to perform a reaction.
Examples of the reactive group include a halogenated alkyl group, a vinyl group, and an epoxy group (glycidyl group).
Examples of the cationic group include an ammonium group, a phosphonium group, and a sulfonium group. Among them, the cationic group is preferably an ammonium group.
The compound $E_D$ is preferably glycidyltrimethylammonium chloride, 3-chloro-2-hydroxypropyltrimethylammonium chloride, and the like from the viewpoint of introduction efficiency of the substituent, and further, defibration efficiency, cost, and ease of handling.
Furthermore, it is also preferable to use the compound B in <Phosphorus oxoacid group introduction step> described above as an optional component. The amount added is also preferably set as described above.
When the compound $E_D$ is added, the compound $E_D$ may be added to the fiber raw material as it is as a reagent (in a solid form or liquid form), or may be added by being dissolved in an appropriate solvent. The fiber raw material is preferably converted into alkali cellulose in advance or simultaneously with the reaction. The method of the alkali cellulose conversion is as described above.
The temperature during the reaction is, for example, preferably 50°C or higher and 300°C or lower, more preferably 100°C or higher and 250°C or lower, and still more preferably 130°C or higher and 200°C or lower.
The amount of the compound $E_D$ added to 100 parts by mass of the fiber raw material is preferably 1 part by mass or more and 100,000 parts by mass or less, more preferably 2 parts by mass or more and 10,000 parts by mass or less, and still more preferably 5 parts by mass or more and 1,000 parts by mass or less.
The reaction time can vary depending on the reaction temperature, and is, for example, preferably 1 minute or more and 1,000 minutes or less, more preferably 5 minutes or more and 500 minutes or less, and still more preferably 10 minutes or more and 400 minutes or less. After the reaction, excess reaction reagents, by-products, and the like may be washed with water, and removed by filtration or the like.

(Washing step)

In the method for producing a fine fibrous cellulose in the present embodiment, an ionic substituent-introduced fiber can be subjected to a washing step as necessary. The washing step is performed by washing the ionic substituent-introduced fiber with, for example, water or an organic solvent. The washing step may be performed after steps described later, and the number of times of washing performed in each washing step is not particularly limited.

(Alkali treatment (neutralization treatment) step)

When the fine fibrous cellulose is produced, the fiber raw material may be subjected to an alkali treatment (neutralization treatment) between the ionic substituent introduction step and a defibration treatment step described later. A method for the alkali treatment is not particularly limited, but examples thereof include a method for immersing an ionic substituent-introduced fiber in an alkaline solution.
An alkali compound contained in the alkaline solution is not particularly limited, and may be an inorganic alkali compound or an organic alkali compound. In the present embodiment, for example, sodium hydroxide or potassium

hydroxide is preferably used as the alkali compound because of high versatility. A solvent contained in the alkaline solution may be either water or an organic solvent. Among these, the solvent contained in the alkaline solution is preferably water, a polar solvent containing a polar organic solvent exemplified by an alcohol, or the like, and more preferably an aqueous solvent containing at least water. The alkaline solution is preferably, for example, a sodium hydroxide aqueous solution or a potassium hydroxide aqueous solution because of high versatility.

The temperature of the alkaline solution in the alkali treatment step is not particularly limited, but is, for example, preferably 5°C or higher and 80°C or lower, and more preferably 10°C or higher and 60°C or lower. The immersion time of the ionic substituent-introduced fiber in the alkaline solution in the alkali treatment step is not particularly limited, but is, for example, preferably 5 minutes or more and 30 minutes or less, and more preferably 10 minutes or more and 20 minutes or less. The amount of the alkaline solution used in the alkali treatment is not particularly limited, but is, for example, preferably 100 parts by mass or more and 100,000 parts by mass or less, and more preferably 1,000 parts by mass or more and 10,000 parts by mass or less based on 100 parts by mass of the absolute dry mass of the ionic substituent-introduced fiber.

In order to reduce the amount of the alkaline solution used in the alkali treatment step, the ionic substituent-introduced fiber may be washed with water or an organic solvent after the ionic substituent introduction step and before the alkali treatment step. After the alkali treatment step and before the defibration treatment step, it is preferable to wash the ionic substituent-introduced fiber subjected to the alkali treatment with water or an organic solvent from the viewpoint of improving handleability.

(Acid treatment step)

When the fine fibrous cellulose is produced, the fiber raw material may be subjected to an acid treatment between the ionic substituent introduction step and a defibration treatment step described later. For example, the ionic substituent introduction step, the acid treatment step, the alkali treatment step, and the defibration treatment step may be performed in this order.

A method for the acid treatment is not particularly limited, but examples thereof include a method for immersing the fiber raw material in an acidic solution containing an acid. The concentration of the acidic solution to be used is not particularly limited, but is, for example, preferably 10% by mass or less, and more preferably 5% by mass or less. The pH of the acidic solution to be used is not particularly limited, but is, for example, preferably 0 or more and 4 or less, and more preferably 1 or more and 3 or less. As the acid contained in the acidic solution, for example, an inorganic acid, a sulfonic acid, or a carboxylic acid can be used. Examples of the inorganic acid include sulfuric acid, nitric acid, hydrochloric acid, hydrobromic acid, hydroiodic acid, hypochlorous acid, chlorous acid, chloric acid, perchloric acid, phosphoric acid, and boric acid. Examples of the sulfonic acid include methanesulfonic acid, ethanesulfonic acid, benzenesulfonic acid, p-toluenesulfonic acid, and trifluoromethanesulfonic acid. Examples of the carboxylic acid include formic acid, acetic acid, citric acid, gluconic acid, lactic acid, oxalic acid, and tartaric acid. Among these, hydrochloric acid or sulfuric acid is particularly preferably used.

The temperature of the acid solution in the acid treatment is not particularly limited, but is, for example, preferably 5°C or higher and 100°C or lower, and more preferably 20°C or higher and 90°C or lower. The immersion time in the acid solution in the acid treatment is not particularly limited, but is, for example, preferably 5 minutes or more and 120 minutes or less, and more preferably 10 minutes or more and 60 minutes or less. The amount of the acid solution used in the acid treatment is not particularly limited, but is, for example, preferably 100 parts by mass or more and 100,000 parts by mass or less, and more preferably 1,000 parts by mass or more and 10,000 parts by mass or less based on 100 parts by mass of the absolute dry mass of the fiber raw material.

(Defibration treatment step)

The fine fibrous cellulose is obtained by subjecting the ionic substituent-introduced fiber to a defibration treatment in a defibration treatment step.

In the defibration treatment step, for example, a defibration treatment device can be used. The defibration treatment device is not particularly limited, but for example, a high-speed defibration machine, a grinder (stone mill pulverizer), a high-pressure homogenizer or an ultra-high pressure homogenizer, a high-pressure collision pulverizer, a ball mill, a bead mill, a disc refiner, a conical refiner, a twin screw kneader, a vibration mill, a homomixer under high-speed rotation, an ultrasonic disperser, a beater, or the like can be used. Among the above defibration treatment devices, it is more preferable to use a high-speed defibration machine, a high-pressure homogenizer, and an ultra-high pressure homogenizer which are less affected by grinding media and are less likely to cause contamination.

In the defibration treatment step, for example, the ionic substituent-introduced fiber is preferably diluted with a dispersion medium to form a slurry. As the dispersion medium, one or two or more selected from water and organic solvents such as a polar organic solvent can be used. The polar organic solvent is not particularly limited, but for example,

alcohols, polyhydric alcohols, ketones, ethers, esters, and aprotic polar solvents are preferable. Examples of the alcohols include methanol, ethanol, isopropanol, n-butanol, and isobutyl alcohol. Examples of the polyhydric alcohols include ethylene glycol, propylene glycol, and glycerin. Examples of the ketones include acetone and methyl ethyl ketone (MEK). Examples of the ethers include diethyl ether, tetrahydrofuran, ethylene glycol monomethyl ether, ethylene glycol monoethyl ether, ethylene glycol mono-n-butyl ether, and propylene glycol monomethyl ether. Examples of the esters include ethyl acetate and butyl acetate. Examples of the aprotic polar solvent include dimethylsulfoxide (DMSO), dimethylformamide (DMF), dimethylacetamide (DMAc), and N-methyl-2-pyrrolidinone (NMP).

The solid content concentration of the fine fibrous cellulose during the defibration treatment can be appropriately set.

The slurry obtained by dispersing the phosphorus oxoacid group-introduced fiber in a dispersion medium may contain a solid content other than the phosphorus oxoacid group-introduced fiber, for example, urea having a hydrogen bonding property.

(Nitrogen removal treatment)

The production process of the fine fibrous cellulose may further include a step of reducing the amount of nitrogen (nitrogen removal treatment step). By reducing the amount of nitrogen, a fine fibrous cellulose capable of further suppressing coloring can be obtained. The nitrogen removal treatment step is preferably provided before the defibration treatment step.

In the nitrogen removal treatment step, it is preferable to adjust the pH of the slurry containing the substituent-introduced fiber to 10 or more and to perform a heat treatment. In the heat treatment, the liquid temperature of the slurry is preferably 50°C or higher and 100°C or lower, and the heating time is preferably 15 minutes or more and 180 minutes or less. When the pH of the slurry containing the substituent-introduced fiber is adjusted, it is preferable to add an alkali compound that can be used in the alkali treatment step described above to the slurry.

After the nitrogen removal treatment step, the substituent-introduced fiber can be subjected to a washing step as necessary. The washing step is performed by washing the ionic substituent-introduced fiber with, for example, water or an organic solvent. The number of times of washing performed in each washing step is not particularly limited.

(Substituent removal treatment)

The method for producing a fine fibrous cellulose may include a step of removing at least a part of the substituent from a fine fibrous cellulose having a substituent and a fiber width of 1 nm or more and 1,000 nm or less. Through such a step, it is also possible to obtain a fine fibrous cellulose that has a low amount of substituents introduced, but has a small fiber width. In the present specification, the step of removing at least a part of the substituent from the fine fibrous cellulose is also referred to as a substituent removal treatment step.

Examples of the substituent removal treatment step include a step of subjecting a fine fibrous cellulose having a substituent and a fiber width of 1 nm or more and 1,000 nm or less to a heat treatment, a step of subjecting the fine fibrous cellulose to an enzyme treatment, a step of subjecting the fine fibrous cellulose to an acid treatment, and a step of subjecting the fine fibrous cellulose to an alkali treatment. These treatments may be performed alone or in combination. Among them, the substituent removal treatment step is preferably a heat treatment step or an enzyme treatment step. Through the above treatment step, at least a part of the substituent is removed from the fine fibrous cellulose having a substituent and a fiber width of 1 nm or more and 1,000 nm or less, whereby a fine fibrous cellulose in which the amount of substituents introduced is less than 0.5 mmol/g can be obtained. By forming the fine fibrous cellulose-containing layer using a such fine fibrous cellulose, a laminate more excellent in water resistance is easily obtained.

The substituent removal treatment step is preferably performed in a slurry form. That is, the substituent removal treatment step is preferably a step of subjecting a slurry containing a fine fibrous cellulose having a substituent and a fiber width of 1 nm or more and 1,000 nm or less to a heat treatment, a step of subjecting the slurry to an enzyme treatment, a step of subjecting the slurry to an acid treatment, a step of subjecting the slurry to an alkali treatment, or the like. By performing the substituent removal treatment step in a slurry form, it is possible to prevent coloring substances generated by heating or the like during the substituent removal treatment, and added or generated acids, alkalis, salts, and the like from remaining in the fine fibrous cellulose. Thus, coloring of the fine fibrous cellulose-containing layer can be suppressed. In addition, when salts derived from the substituent removed after the substituent removal treatment are subjected to a removal treatment, it is also possible to increase the salt removal efficiency.

When a slurry containing a fine fibrous cellulose having a substituent and a fiber width of 1 nm or more and 1,000 nm or less is subjected to a substituent removal treatment, the concentration of the fine fibrous cellulose in the slurry is preferably 0.05% by mass or more and 20% by mass or less, more preferably 0.1% by mass or more, and still more preferably 0.2% by mass or more, and more preferably 15% by mass or less, and still more preferably 10% by mass or less. By setting the concentration of the fine fibrous cellulose in the slurry within the above range, the substituent removal

treatment can be more efficiently performed. Furthermore, by setting the concentration of the fine fibrous cellulose in the slurry within the above range, it is possible to prevent coloring substances generated by heating or the like during the substituent removal treatment, and added or generated acids, alkalis, salts, and the like from remaining in the fine fibrous cellulose. Thus, coloring of the fine fibrous cellulose-containing layer can be suppressed. In addition, when salts derived from the substituent removed after the substituent removal treatment are subjected to a removal treatment, it is also possible to increase the salt removal efficiency.

When the substituent removal treatment step is a step of subjecting a fine fibrous cellulose having a substituent and a fiber width of 1 nm or more and 1,000 nm or less to a heat treatment, the heating temperature in the heat treatment step is preferably 40°C or higher and 250°C or lower, more preferably 50°C or higher, and still more preferably 60°C or higher, and more preferably 230°C or lower and still more preferably 200°C or lower. In particular, when the substituent of the fine fibrous cellulose to be subjected to the substituent removal treatment step is a phosphorus oxoacid group, the heating temperature in the heat treatment step is preferably 80°C or higher, more preferably 100°C or higher, and still more preferably 120°C or higher.

When the substituent removal treatment step is a step of performing a heat treatment, the heating device that can be used in the heat treatment step is not particularly limited, but a hot-air heating device, a steam heating device, an electric heating device, a hydrothermal heating device, a thermal heating device, an infrared heating device, a far infrared heating device, a microwave heating device, a high frequency heating device, a stirring and drying device, a rotary drying device, a disk drying device, a roll type heating device, a plate type heating device, a fluidized bed drying device, a band type drying device, a filtration drying device, a vibration fluidizing drying device, an airflow drying device, or a reduced pressure drying device can be used. From the viewpoint of preventing evaporation, heating is preferably performed in a sealed system, and from the viewpoint of further increasing the heating temperature, heating is preferably performed in a pressure-resistant device or container. The heat treatment may be a batch treatment, a batch continuous treatment, or a continuous treatment.

When the substituent removal treatment step is a step of subjecting a fine fibrous cellulose having a substituent and a fiber width of 1 nm or more and 1,000 nm or less to an enzyme treatment, a phosphate ester hydrolase, a sulfate ester hydrolase or the like is preferably used depending on the type of the substituent in the enzyme treatment step.

In the enzyme treatment step, an enzyme is added so that the enzyme activity is preferably 0.1 nkat or more and 100,000 nkat or less, more preferably 1.0 nkat or more, still more preferably 10 nkat or more, and more preferably 50,000 nkat or less, still more preferably 10,000 nkat or less with respect to 1 g of the fine fibrous cellulose. After the enzyme is added to the fine fibrous cellulose dispersion (slurry), it is preferable to perform treatment for 1 minute or more and 100 hours or less under the condition of 0°C or higher and lower than 50°C.

After the enzyme reaction, a step of deactivating the enzyme may be provided. Examples of the method for deactivating the enzyme include a method in which an acid component or an alkali component is added to the slurry subjected to the enzyme treatment to deactivate the enzyme, and a method in which the temperature of the slurry subjected to the enzyme treatment is raised to 90°C or higher to deactivate the enzyme.

When the substituent removal treatment step is a step of subjecting a fine fibrous cellulose having a substituent and a fiber width of 1 nm or more and 1,000 nm or less to an acid treatment, in the acid treatment step, an acid compound that can be used in the above acid treatment step is preferably added to the slurry.

When the substituent removal treatment step is a step of subjecting a fine fibrous cellulose having a substituent and a fiber width of 1 nm or more and 1,000 nm or less to an alkali treatment, in the alkali treatment step, an alkali compound that can be used in the above alkali treatment step is preferably added to the slurry.

In the substituent removal treatment step, it is preferable that the substituent removal reaction proceeds uniformly. In order to uniformly proceed the reaction, for example, the slurry containing a fine fibrous cellulose may be stirred, or the specific surface area of the slurry may be increased. As a method for stirring the slurry, external mechanical shear may be given to the slurry, or self-stirring may be promoted by increasing the feeding speed of the slurry during the reaction.

In the substituent removal treatment step, spacer molecules may be added. The spacer molecules enter between adjacent fine fibrous celluloses, thereby acting as spacers for providing small spaces between the fine fibrous celluloses. In the substituent removal treatment step, by adding such spacer molecules, aggregation of fine fibrous celluloses after the substituent removal treatment can be suppressed. This makes it possible to more effectively enhance the transparency of the fine fibrous cellulose-containing layer.

The spacer molecule is preferably a water-soluble organic compound. Examples of the water-soluble organic compound include sugars, water-soluble polymers, and urea. Specific examples of the water-soluble organic compound include trehalose, urea, polyethylene glycol (PEG), polyethylene oxide (PEO), carboxymethyl cellulose, and polyvinyl alcohol (PVA). In addition, examples of the water-soluble organic compound that can be used include an alkyl methacrylate-acrylic acid copolymer, polyvinyl pyrrolidone, sodium polyacrylate, propylene glycol, dipropylene glycol, polypropylene glycol, isoprene glycol, hexylene glycol, 1,3-butylene glycol, polyacrylamide, xanthan gum, guar gum, tamarind gum, carrageenan, locust bean gum, quince seed, alginic acid, pullulan, carrageenan, pectin, starches such as

cationized starch, raw starch, oxidized starch, etherified starch, esterified starch, and amylose, glycerin, diglycerin, polyglycerin, hyaluronic acid, and a metal salt of hyaluronic acid.

In addition, a known pigment can be used as the spacer molecule. Examples of the known pigment include kaolin (containing clay), calcium carbonate, titanium oxide, zinc oxide, amorphous silica (containing colloidal silica), aluminum oxide, zeolite, sepiolite, smectite, synthetic smectite, magnesium silicate, magnesium carbonate, magnesium oxide, diatomaceous earth, a styrene-based plastic pigment, hydrotalcite, a urea resin-based plastic pigment, and a benzoguanamine-based plastic pigment.

(pH adjustment step)

When the above substituent removal treatment step is performed in a slurry form, a step of adjusting the pH of the slurry containing a fine fibrous cellulose may be provided before the substituent removal treatment step. For example, when an ionic substituent is introduced into the cellulose fiber and the counter ion of the ionic substituent is $Na^+$, the slurry containing a fine fibrous cellulose after defibration exhibits weak alkalinity. When the slurry is heated in this state, a monosaccharide which is one of the coloring factors may be generated due to the decomposition of cellulose. Therefore, the pH of the slurry is preferably adjusted to 8 or less. In addition, since the monosaccharide may be generated also under acidic conditions, the pH of the slurry is preferably adjusted to 3 or more.

When the fine fibrous cellulose having a substituent is a fine fibrous cellulose having a phosphate group, the phosphorus of the phosphate group is preferably in a state of being susceptible to nucleophilic attack from the viewpoint of improving the removal efficiency of the substituent. The state in which the phosphorus of the phosphate group is susceptible to nucleophilic attack is a state in which the degree of neutralization is 1 represented by cellulose -O-P(=O)(-O-$H^+$)(-O-$Na^+$). In order to achieve this state, the pH of the slurry is preferably adjusted to 3 or more and 8 or less, and more preferably 4 or more and 6 or less.

The means for adjusting the pH is not particularly limited, but for example, an acid component or an alkali component may be added to the slurry containing a fine fibrous cellulose. The acid component may be either an inorganic acid or an organic acid, and examples of the inorganic acid include sulfuric acid, hydrochloric acid, nitric acid, and phosphoric acid. Examples of the organic acid include formic acid, acetic acid, citric acid, malic acid, lactic acid, adipic acid, sebacic acid, stearic acid, maleic acid, succinic acid, tartaric acid, fumaric acid, and gluconic acid. The alkali component may be an inorganic alkali compound or an organic alkali compound. Examples of the inorganic alkali compound include lithium hydroxide, sodium hydroxide, potassium hydroxide, lithium carbonate, lithium hydrogen carbonate, potassium carbonate, potassium hydrogen carbonate, sodium carbonate, and sodium hydrogen carbonate. Examples of the organic alkali compound include ammonia, hydrazine, methylamine, ethylamine, diethylamine, triethylamine, propylamine, dipropylamine, butylamine, diaminoethane, diaminopropane, diaminobutane, diaminopentane, diaminohexane, cyclohexylamine, aniline, tetramethylammonium hydroxide, tetraethylammonium hydroxide, tetrapropylammonium hydroxide, tetrabutylammonium hydroxide, benzyltrimethylammonium hydroxide, pyridine, and N,N-dimethyl-4-aminopyridine.

In the pH adjustment step, an ion exchange treatment may be performed to adjust the pH. In the ion exchange treatment, a strongly acidic cation exchange resin or a weakly acidic ion exchange resin can be used. By treating the slurry with an appropriate amount of cation exchange resin for a sufficient time, a slurry containing a fine fibrous cellulose having a desired pH can be obtained. Furthermore, in the pH adjustment step, addition of an acid component or an alkali component may be combined with an ion exchange treatment.

(Salt removal treatment)

After the substituent removal treatment step, it is preferable to perform a treatment of removing salts derived from the removed substituent. By removing the salts derived from the substituent, it becomes easy to obtain a fine fibrous cellulose capable of suppressing coloring. The means for removing the salts derived from the substituent is not particularly limited, and examples thereof include a washing treatment and an ion exchange treatment. The washing treatment is performed, for example, by washing the fine fibrous cellulose aggregated by the substituent removal treatment with water or an organic solvent. In the ion exchange treatment, an ion exchange resin can be used.

(Uniform dispersion treatment)

After the substituent removal treatment step, a step of uniformly dispersing the fine fibrous cellulose obtained through the substituent removal treatment may be provided. By subjecting the fine fibrous cellulose to the substituent removal treatment, at least a part of the fine fibrous cellulose is aggregated. The uniform dispersion treatment step is a step of uniformly dispersing the fine fibrous cellulose aggregated as described above.

In the uniform dispersion treatment step, for example, a high-speed defibration machine, a grinder (stone mill pulverizer), a high-pressure homogenizer, a high-pressure collision pulverizer, a ball mill, a bead mill, a disc refiner, a

conical refiner, a twin screw kneader, a vibration mill, a homomixer under high-speed rotation, an ultrasonic disperser, a beater, or the like can be used. Among the above uniform dispersion treatment devices, it is more preferable to use a high-speed defibration machine and a high-pressure homogenizer.

The treatment conditions in the uniform dispersion treatment step are not particularly limited, but it is preferable to increase the maximum moving speed of the fine fibrous cellulose during the treatment and the pressure applied during the treatment. In the high-speed defibration machine, the peripheral speed is preferably 20 m/sec or more, more preferably 25 m/sec or more, and still more preferably 30 m/sec or more. The high-pressure homogenizer is more preferably used than the high-speed defibration machine because the maximum moving speed of the fine fibrous cellulose during the treatment and the pressure applied during the treatment increase. In the high-pressure homogenizer treatment, the pressure during the treatment is preferably 1 MPa or more and 350 MPa or less, more preferably 10 MPa or more and 300 MPa or less, and still more preferably 50 MPa or more and 250 MPa or less.

In the uniform dispersion treatment step, the above spacer molecules may be newly added. In the uniform dispersion treatment step, by adding such spacer molecules, uniform dispersion of the fine fibrous cellulose can be more smoothly performed. This makes it possible to more effectively enhance the transparency of the fine fibrous cellulose-containing layer.

In the fine fibrous cellulose-containing layer in the present embodiment, the content of the fine fibrous cellulose in the solid content of the fine fibrous cellulose-containing layer is preferably 30% by mass or more and 99% by mass or less, more preferably 45% by mass or more, still more preferably 60% by mass or more, and further still more preferably 75% by mass or more, and is more preferably 96% by mass or less, still more preferably 93% by mass or less, and further still more preferably 90% by mass or less from the viewpoints of increasing the tensile elastic modulus, decreasing the linear thermal expansion coefficient, and obtaining a laminate that is less susceptible to adherence of dust and has excellent laser cutter processability.

As the fine fibrous cellulose, a fine fibrous cellulose containing an ionic group and an unmodified fine fibrous cellulose may be used in combination. When these fine fibrous celluloses are used in combination, the content of the fine fibrous cellulose containing an ionic group in the fine fibrous cellulose is preferably 50% by mass or more, more preferably 70% by mass or more, still more preferably 90% by mass or more, further still more preferably 95% by mass or more, and 99% by mass or less.

<Hydrophilic polymer>

The fine fibrous cellulose-containing layer in the present embodiment preferably contains a hydrophilic polymer from the viewpoint of ease of production of the fine fibrous cellulose-containing layer. Examples of the hydrophilic polymer include polyethylene glycol, polyethylene oxide, casein, dextrin, starch, modified starch, polyvinyl alcohol, modified polyvinyl alcohol (acetoacetylated polyvinyl alcohol and the like), polyvinyl butyral, polyvinyl pyrrolidone, polyvinyl methyl ether, polyacrylates, polyacrylamide, an alkyl acrylate copolymer, a urethane-based copolymer, and a cellulose derivative (hydroxyethyl cellulose, carboxyethyl cellulose, carboxymethyl cellulose, and the like). The hydrophilic polymer is preferably polyethylene oxide, polyvinyl alcohol, modified polyvinyl alcohol, and a cellulose derivative, and more preferably polyethylene oxide.

The viscosity average molecular weight of the polyethylene oxide is, for example, 2,000,000 or more and 7,500,000 or less, preferably 3,000,000 or more, more preferably 4,000,000 or more, and preferably 6,500,000 or less, more preferably 5,500,000 or less. When a commercially available product is used as the hydrophilic compound, a published value of the manufacturer can be adopted as the viscosity average molecular weight.

In the fine fibrous cellulose-containing layer in the present embodiment, the content of the hydrophilic polymer is preferably 5 parts by mass or more and 40 parts by mass or less, more preferably 35 parts by mass or less, still more preferably 30 parts by mass or less, and further still more preferably 25 parts by mass or less, and is more preferably 8 parts by mass or more, still more preferably 12 parts by mass or more, and further still more preferably 15 parts by mass or more based on 100 parts by mass of the fine fibrous cellulose from the viewpoints of suppressing adhesion of dirt such as dust and laser cutter processability.

In the fine fibrous cellulose-containing layer in the present embodiment, the total of the content of the fine fibrous cellulose and the content of the hydrophilic polymer in the solid content of the fine fibrous cellulose-containing layer is preferably 80% by mass or more, more preferably 85% by mass or more, still more preferably 90% by mass or more, and further still more preferably 95% by mass or more, and 100% by mass or less from the viewpoint of obtaining a laminate that is less susceptible to adherence of dust and has excellent laser cutter processability.

<Other components>

The fine fibrous cellulose-containing layer in the present embodiment may contain components other than the fine fibrous cellulose and the hydrophilic polymer (other components). Examples of other components include a

hydrophilic low molecular weight substance, a paper strength enhancer, a thermoplastic resin, a surfactant, an organic ion, a coupling agent, an inorganic layered compound, an inorganic compound, a leveling agent, an antiseptic, an antifoaming agent, organic particles, a lubricant, an antistatic agent, an ultraviolet protecting agent, a stabilizer, a magnetic powder, an orientation accelerator, a plasticizer, a dispersant, a coloring inhibitor, a polymerization inhibitor, a pH adjuster, and a crosslinking agent.

In the fine fibrous cellulose-containing layer in the present embodiment, the content of "other components" in the solid content of the fine fibrous cellulose-containing layer can be, for example, 5% by mass or less, 3% by mass or less, 1% by mass or less, or 0% by mass.

<Thickness>

The thickness of the fine fibrous cellulose-containing layer in the present embodiment is preferably 5 μm or more and 1,000 μm or less, more preferably 10 μm or more, still more preferably 15 μm or more, and further still more preferably 20 μm or more, and is more preferably 800 μm or less, still more preferably 600 μm or less, further still more preferably 400 μm or less, yet more preferably 200 μm or less, still even more preferably 100 μm or less, and still yet more preferably 50 μm or less. The thickness of the fine fibrous cellulose-containing layer is preferably appropriately adjusted according to the application of the laminate. When the fine fibrous cellulose-containing layer is a multilayer layer, the total thickness of the layers is preferably within the above range.

<Basis weight>

The basis weight of the fine fibrous cellulose-containing layer in the present embodiment is preferably 5 $g/m^2$ or more and 1,000 $g/m^2$ or less, more preferably 10 $g/m^2$ or more, still more preferably 15 $g/m^2$ or more, and further still more preferably 20 $g/m^2$ or more, and is more preferably 500 $g/m^2$ or less, still more preferably 100 $g/m^2$ or less, and further still more preferably 50 $g/m^2$ or less. When the fine fibrous cellulose-containing layer is a multilayer layer, the total basis weight of the layers is preferably within the above range.

<Density>

The density of the fine fibrous cellulose-containing layer in the present embodiment is preferably 1.00 $g/cm^3$ or more and 3.00 $g/cm^3$ or less, more preferably 1.10 $g/cm^3$ or more, still more preferably 1.20 $g/cm^3$ or more, and more preferably 1.70 $g/cm^3$ or less, still more preferably 1.60 $g/cm^3$ or less. The density of the fine fibrous cellulose-containing layer is calculated by dividing the basis weight of the fine fibrous cellulose-containing layer by the thickness.

[Cationic layer]

The cationic layer in the present embodiment contains a cationic compound.

<Cationic compound>

The "cationic compound" contained in the cationic layer in the present embodiment is a compound having a cationic group and exhibiting cationic properties as a whole. The "cationic compound" does not include the above fine fibrous cellulose (form having a cationic group).

The "cationic group" of the cationic compound refers to a cationic group or a group that can be ionized to become a cationic group. Examples of the cationic group include an amino group and a phosphonium group, and an amino group is preferable. The amino group includes a primary amino group, a secondary amino group, a tertiary amino group, and a quaternary ammonium group.

The cationic compound may be a low molecular weight (cationic low molecular weight compound) or a polymer (cationic polymer), but a cationic polymer is preferable. The cationic polymer may be a chain polymerization type polymer or a sequential polymerization type polymer. The chain polymerization type polymer may be a homopolymer or a copolymer. The polymerized form of the copolymer may be any of random, block, and graft.

Specific examples of the cationic low molecular weight compound include amine compounds and cationic surfactants, and examples thereof include amine compounds and cationic surfactants described in JP 2023-87001 A, JP 2023-64090 A, and JP 2023-84122 A. Specific examples of the amine compound include amine compounds containing a hydroxyl group, such as bis-hydroxyethyllaurylamine, dimethylethanolamine, diethylethanolamine, diethanolamine, methyldiethanolamine, N,N-dimethylaminohexanol, N,N-dimethylaminoethoxyethanol, N,N-dimethylaminoethoxyethoxyethanol, N,N,N'-trimethylaminoethylethanolamine, and N-methyl-N-(dimethylaminopropyl)aminoethanol; lauryldimethylamine, lauryloyldimethylamidopropylamine, cocoylamidopropylamine, alkyldimethylamine, alkoxyalkyldimethylamine, and alkylamidoalkyldimethylamine. Specific examples of the cationic surfactant include quaternary ammonium salts having an aliphatic chain, such as lauryltrimethylammonium chloride and lauryloylamidopropyltrimethylammonium chloride, and cationic surfactants obtained by ionizing the amine compound.

The molecular weight of the cationic low molecular weight compound is, for example, 30 or more and 1,000 or less, preferably 50 or more, more preferably 100 or more, and preferably 800 or less, more preferably 600 or less.

Specific examples of the cationic polymer include the following polymers including the cationic resin described in JP 2010-253824 A.

- ·Polyethyleneimine
- ·Polyallylamine
- ·α-Polylysine, ε-polylysine
- ·Dimethyldiallyl ammonium chloride-acrylamide copolymers
- ·Cationic cellulose derivatives (such as salts of hydroxyethyl cellulose that reacts with trimethylammonium-substituted epoxide)
- ·Polysaccharide polymers (such as cationic starch derivatives)
- ·Polyalkylene polyamines such as polyethylene polyamine and polypropylene polyamine or derivatives thereof
- ·Acrylic polymers having a secondary or tertiary amino group or a quaternary ammonium group, or copolymers of acrylamides having a secondary or tertiary amino group or a quaternary ammonium group
- ·Polyvinylamines and polyvinylamidines
- ·Dicyandiamide-based cationic compounds represented by dicyandiamide-formalin copolymers
- ·Polyamine-based cationic compounds represented by dicyandiamide-polyethylene amine copolymers
- ·Epichlorohydrin-dimethylamine copolymers
- ·Diallyldimethylammonium-$SO_2$ polycondensates
- ·Diallylamine salt-$SO_2$ polycondensates
- ·Diallyldimethylammonium chloride polymers
- ·Copolymers of allylamine salts
- ·Dialkylaminoethyl (meth)acrylate quaternary salt copolymers
- ·Acrylamide-diallylamine copolymers
- ·Cationic resins having 5-membered amidine structure

The polysaccharide polymer does not include a cationic cellulose derivative.

The weight average molecular weight of the cationic polymer is, for example, more than 1,000 and 2 million or less, preferably 1,500 or more, more preferably 2,000 or more, and preferably 1 million or less, more preferably 500,000 or less. The weight average molecular weight can be measured by gel permeation chromatography (GPC). When a commercially available product is used as the cationic compound, the published value of the manufacturer can be adopted as the weight average molecular weight.

When the cationic low molecular weight compound is used in the cationic layer in the present embodiment, the content of the cationic low molecular weight compound in the solid content of the cationic layer is preferably 30% by mass or more and 100% by mass or less, more preferably 40% by mass or more, still more preferably 50% by mass or more, and further still more preferably 60% by mass or more, and is more preferably 95% by mass or less, still more preferably 90% by mass or less, and further still more preferably 85% by mass or less from the viewpoint of obtaining a laminate that is less susceptible to adherence of dust and has excellent laser cutter processability.

When the cationic polymer is used in the cationic layer in the present embodiment, the content of the cationic polymer in the solid content of the cationic layer is preferably 80% by mass or more, more preferably 85% by mass or more, still more preferably 90% by mass or more, and further still more preferably 95% by mass or more, and 100% by mass or less from the viewpoint of obtaining a laminate that is less susceptible to adherence of dust and has excellent laser cutter processability.

When the cationic low molecular weight compound and the cationic polymer are used in combination in the cationic layer in the present embodiment, the preferred range of the total content of the cationic low molecular weight compound and the cationic polymer in the solid content of the cationic layer is the same as the preferred range of the content of the cationic polymer.

When the cationic low molecular weight compound is used in the cationic layer in the present embodiment, it is preferable to use the cationic low molecular weight compound in combination with a resin component such as polyethylene glycol, polyethylene oxide, casein, dextrin, starch, modified starch, polyvinyl alcohol, modified polyvinyl alcohol (acetoacetylated polyvinyl alcohol or the like), polyvinyl butyral, polyvinyl pyrrolidone, polyvinyl methyl ether, polyacrylates, polyacrylamide, an alkyl acrylate copolymer, a urethane-based copolymer, or a cellulose derivative (hydroxyethyl cellulose, carboxyethyl cellulose, carboxymethyl cellulose, and the like).

When the cationic low molecular weight compound is used as the cationic compound in the cationic layer in the

present embodiment, the content of the resin component in the solid content of the cationic layer is preferably 0% by mass or more and 70% by mass or less, more preferably 5% by mass or more, still more preferably 10% by mass or more, and further still more preferably 15% by mass or more, and is more preferably 60% by mass or less, still more preferably 50% by mass or less, and further still more preferably 40% by mass or less.

<Other components>

The cationic layer in the present embodiment may contain components other than the cationic compound and the resin component (other components). Examples of the other components include a rheology modifier, a filler, an ultraviolet absorber, a light stabilizer, a heat stabilizer, an antioxidant, an antistatic agent, a lubricant, a flame retardant, an antibacterial agent, an antifungal agent, an antifriction agent, a light scattering agent, and a gloss modifier.

In the cationic layer in the present embodiment, the content of the "other components" in the solid content of the cationic layer can be, for example, 5% by mass or less, 3% by mass or less, 1% by mass or less, or 0% by mass.

<Thickness>

The thickness of the cationic layer in the present embodiment is preferably 0.1 nm or more and 5 μm or less, more preferably 5 nm or more, still more preferably 10 nm or more, further still more preferably 30 nm or more, and yet more preferably 50 nm or more, and is more preferably 2.5 μm or less, still more preferably 1 μm or less, further still more preferably 500 nm or less, and yet more preferably 100 nm or less from the viewpoint of obtaining a laminate that is less susceptible to adherence of dust and has excellent laser cutter processability. The thickness of the cationic layer is preferably appropriately adjusted according to the application of the laminate. When the cationic layer is a multilayer, the total thickness of the layers is preferably within the above range.

<Basis weight>

The basis weight of the cationic layer in the present embodiment is preferably 0.1 $mg/m^2$ or more and 200 $mg/m^2$ or less, more preferably 0.5 $mg/m^2$ or more, still more preferably 3.0 $mg/m^2$ or more, and further still more preferably 5.0 $mg/m^2$ or more, and is more preferably 150 $mg/m^2$ or less, still more preferably 100 $mg/m^2$ or less, and further still more preferably 80 $mg/m^2$ or less from the viewpoint of obtaining a laminate that is less susceptible to adherence of dust and has excellent laser cutter processability. When the cationic layer is a multilayer, the total basis weight of the layers is preferably within the above range.

<Density>

The density of the cationic layer in the present embodiment is preferably 0.1 $g/cm^3$ or more and 3.0 $g/cm^3$ or less, more preferably 0.3 $g/cm^3$ or more, still more preferably 0.5 $g/cm^3$ or more, and more preferably 2.5 $g/cm^3$ or less, still more preferably 2.0 $g/cm^3$ or less. The density of the cationic layer is calculated by dividing the basis weight of the cationic layer by the thickness.

[Substrate film layer]

When the laminate of the present embodiment has a cationic layer on one surface of the fine fibrous cellulose-containing layer, the laminate may not have a layer on a surface opposite to the surface having the cationic layer of the fine fibrous cellulose-containing layer, or may have a substrate film layer on the surface.

Examples of the polymer constituting the substrate film layer include synthetic resins such as polyethylene terephthalate, polycarbonate, polyethylene naphthalate, polyethylene, polypropylene, polyimide, polystyrene, and acrylic, and natural resins such as rosin, rosin ester, and hydrogenated rosin ester.

The thickness of the substrate film layer in the present embodiment is preferably 50 μm or more and 500 μm or less, more preferably 100 μm or more, still more preferably 150 μm or more, and more preferably 400 μm or less, still more preferably 300 μm or less. The thickness of the substrate film layer is preferably appropriately adjusted according to the application of the laminate.

[Other layers]

When the laminate of the present embodiment has the above substrate film layer, for example, the laminate may have an adhesive layer and/or a primer layer between the substrate film layer and the fine fibrous cellulose-containing layer. The laminate of the present embodiment may also have an adhesive layer and/or a primer layer on a surface

opposite to the surface having the fine fibrous cellulose-containing layer of the substrate film layer. The substrate film layer may be subjected to a surface treatment such as a corona treatment or a plasma treatment.

[Characteristics of laminate]

[Total light transmittance]

The total light transmittance of the laminate of the present embodiment is preferably 80% or more, more preferably 83% or more, and still more preferably 85% or more. On the other hand, the upper limit value of the total light transmittance of the laminate may be, for example, 100%. The total light transmittance of the laminate is controlled by the fiber width of the fine fibrous cellulose, the type of the ionic group, the amount of ionic groups introduced, the type of the hydrophilic polymer, the type of the cationic compound, the presence or absence of the substrate film layer, the type of the substrate film layer, and the contents of the fine fibrous cellulose and the hydrophilic polymer in the fine fibrous cellulose-containing layer.

The total light transmittance of the laminate is a value measured by the method described in Examples.

[Haze]

The haze of the laminate of the present embodiment is preferably 4.5% or less, more preferably 3.5% or less, still more preferably 3.0% or less, and further still more preferably 2.5% or less. On the other hand, the lower limit value of the haze of the laminate may be, for example, 0%. The haze of the laminate is controlled by the fiber width of the fine fibrous cellulose, the type of the ionic group, the amount of ionic groups introduced, the type of the hydrophilic polymer, the type of the cationic compound, the presence or absence of the substrate film layer, the type of the substrate film layer, the contents of the fine fibrous cellulose and the hydrophilic polymer in the fine fibrous cellulose-containing layer, irregularities on the surface of the fine fibrous cellulose-containing layer, and the like.

The haze of the laminate is a value measured by the method described in Examples.

[Tensile strength]

The tensile strength of the laminate of the present embodiment at 23°C and a relative humidity of 50% is preferably 105 MPa or more and 185 MPa or less, more preferably 110 MPa or more, still more preferably 115 MPa or more, and more preferably 180 MPa or less, still more preferably 175 MPa or less. The tensile strength of the laminate is controlled by the fiber width of the fine fibrous cellulose, the type of the hydrophilic polymer, the type of the cationic compound, the presence or absence of the substrate film layer, the type of the substrate film layer, the contents of the fine fibrous cellulose and the hydrophilic polymer in the fine fibrous cellulose-containing layer, and the like.

The tensile strength of the laminate is a value measured by the method described in Examples.

[Tensile elastic modulus]

The tensile elastic modulus of the laminate of the present embodiment at 23°C is preferably 4.0 GPa or more and 16.0 GPa or less, more preferably 4.5 GPa or more, still more preferably 5.0 GPa or more, and more preferably 15.5 GPa or less, still more preferably 15.0 GPa or less. The tensile elastic modulus of the laminate is controlled by the fiber width of the fine fibrous cellulose, the type of the hydrophilic polymer, the type of the cationic compound, the presence or absence of the substrate film layer, the type of the substrate film layer, the contents of the fine fibrous cellulose and the hydrophilic polymer in the fine fibrous cellulose-containing layer, and the like.

The tensile elastic modulus of the laminate is a value measured at a relative humidity of 50%, and specifically, is measured by the method described in Examples.

[Linear thermal expansion coefficient]

The linear thermal expansion coefficient of the laminate of the present embodiment in the measurement range of 100°C or higher and 150°C or lower is preferably 70 ppm/K or less.

The linear thermal expansion coefficient is preferably low, but from the viewpoint of production, the linear thermal expansion coefficient is more preferably 55 ppm/K or less, still more preferably 45 ppm/K or less, further still more preferably 35 ppm/K or less, yet more preferably 25 ppm/K or less, and still even more preferably 15 ppm/K or less. The lower limit of the linear thermal expansion coefficient is not particularly limited, and may be, for example, 0 ppm/K, or less than 0 ppm/K. The linear thermal expansion coefficient of the laminate at 100 to 150°C is controlled by the fiber width of the fine fibrous cellulose, the type of the ionic group, the amount of ionic groups introduced, the type of the hydrophilic polymer,

the type of the cationic compound, the presence or absence of the substrate film layer, the type of the substrate film layer, the contents of the fine fibrous cellulose and the hydrophilic polymer in the fine fibrous cellulose-containing layer, and the like.

The linear thermal expansion coefficient of the laminate in the measurement range of 100°C or higher and 150°C or lower is measured by the method described in Examples.

[Water absorption rate]

In the laminate of the present embodiment, the water absorption rate represented by the following formula (1) is, for example, less than 2,000%, preferably 1,500% or less, more preferably 1,000% or less, and for example, 100% or more from the viewpoint of shape maintenance.

$$\text{Water absorption rate} = (W - Wd)/Wd \times 100 \quad (1)$$

(Here, W represents a mass after the laminate is immersed in ion-exchanged water for 24 hours, and Wd represents a mass after the laminate is subjected to humidity control at 23°C and a relative humidity of 50% for 24 hours.)

[Thickness]

The thickness of the laminate of the present embodiment is preferably 10 μm or more and 1,500 μm or less, more preferably 15 μm or more, still more preferably 20 μm or more, and is more preferably 1,200 μm or less, still more preferably 900 μm or less, further still more preferably 600 μm or less, yet more preferably 300 μm or less, still even more preferably 100 μm or less, still yet more preferably 50 μm or less.

**When the laminate of the present embodiment does not have a substrate film layer, the thickness of the laminate (cationic layer-fine fibrous cellulose-containing layer) is** preferably 10 μm or more and 250 μm or less, more preferably 15 μm or more, still more preferably 20 μm or more, and is more preferably 200 μm or less, still more preferably 150 μm or less, further still more preferably 100 μm or less, yet more preferably 50 μm or less, still even more preferably 35 μm or less.

When the laminate of the present embodiment has a substrate film layer, the thickness of the laminate (cationic layer-fine fibrous cellulose-containing layer-substrate film layer) is preferably 100 μm or more and 1,500 μm or less, more preferably 150 μm or more, still more preferably 200 μm or more, and further still more preferably 250 μm or more, and is more preferably 1,200 μm or less, still more preferably 900 μm or less, further still more preferably 600 μm or less, and yet more preferably 300 μm or less.

The thickness of the laminate is preferably appropriately adjusted according to the application.

[Basis weight]

The basis weight of the laminate of the present embodiment is preferably 10 g/m$^2$ or more and 2,500 g/m$^2$ or less, more preferably 20 g/m$^2$ or more, and still more preferably 30 g/m$^2$ or more, and is more preferably 2,000 g/m$^2$ or less, still more preferably 1,500 g/m$^2$ or less, further still more preferably 1,000 g/m$^2$ or less, yet more preferably 500 g/m$^2$ or less, still even more preferably 100 g/m$^2$ or less, and still yet more preferably 50 g/m$^2$ or less.

**When the laminate of the present embodiment does not have a substrate film layer, the basis weight of the laminate (cationic layer-**fine **fibrous cellulose-containing layer) is preferably 10 g/m$^2$ or more and 250 g/m$^2$ or less, more preferably 20 g/m$^2$ or more, still more preferably 30 g/m$^2$ or more, and is more preferably 200 g/m$^2$ or less, still more preferably 150 g/m$^2$ or less, further still more preferably 100 g/m$^2$ or less, yet more preferably 50 g/m$^2$ or less.**

**When the laminate of the present embodiment has a substrate film layer, the basis weight of the laminate (cationic layer-**fine **fibrous cellulose-containing layer-substrate film layer) is preferably 100 g/m$^2$ or more and 2,500 g/m$^2$ or less, more preferably 200 g/m$^2$ or more, still more preferably 300 g/m$^2$ or more, and further still more preferably 350 g/m$^2$ or more, and is more preferably 2,000 g/m$^2$ or less, still more preferably 1,500 g/m$^2$ or less, further still more preferably 1,000 g/m$^2$ or less, and yet more preferably 450 g/m$^2$ or less.**

[Density]

The density of the laminate of the present embodiment is preferably 1.0 g/cm$^3$ or more and 3.0 g/cm$^3$ or less, more preferably 1.1 g/cm$^3$ or more, still more preferably 1.2 g/cm$^3$ or more, and more preferably 1.7 g/cm$^3$ or less, still more preferably 1.5 g/cm$^3$ or less. The density of the laminate is calculated by dividing the basis weight of the laminate by the

thickness.

[Method for producing laminate]

The laminate of the present embodiment can be produced, for example, by performing a step of preparing a fine fibrous cellulose-containing sheet, and a cationic layer formation step in this order.

[Step of preparing fine fibrous cellulose-containing sheet]

The step of preparing a fine fibrous cellulose-containing sheet is performed using a liquid composition (slurry (dispersion medium is, for example, water)) containing the fine fibrous cellulose described above, as necessary, a hydrophilic polymer, and other components.

For example, a slurry containing a fine fibrous cellulose and a hydrophilic compound is applied onto the above substrate film layer, and the fine fibrous cellulose-containing sheet formed by drying the slurry is peeled off from the substrate, whereby a fine fibrous cellulose-containing sheet can be obtained. The sheet can be continuously produced by using a coating device and a long or continuous substrate. When a laminate having a substrate film layer on a surface opposite to the surface having the cationic layer of the fine fibrous cellulose-containing layer is obtained, the above substrate film layer is used as a substrate, and the cationic layer formation step described later is performed without peeling the fine fibrous cellulose-containing sheet from the substrate.

Examples of the substrate that can be used in addition to the above substrate film layer in the step of preparing a fine fibrous cellulose-containing sheet include metal films or plates made of a metal such as aluminum, zinc, copper, or an iron plate, films or plates obtained by subjecting the surface thereof to an oxidation treatment, a film or a plate made of stainless steel, and a film or a plate made of brass.

When the slurry has a low viscosity and spreads on the substrate in the step of preparing a fine fibrous cellulose-containing sheet, a damming frame may be fixed and used on the substrate in order to obtain a sheet having a predetermined thickness and basis weight. The damming frame is not particularly limited, but for example, it is preferable to select a damming frame from which the edges of the dried sheet adhered to the frame can be easily peeled off. From such a viewpoint, a damming frame formed from a resin plate or a metal plate is preferable. In the present embodiment, examples of the frame that can be used include frames formed from a resin plate such as an acrylic plate, a polyethylene terephthalate plate, a vinyl chloride plate, a polystyrene plate, a polypropylene plate, a polycarbonate plate, or a polyvinylidene chloride plate, frames formed from a metal plate such as an aluminum plate, a zinc plate, a copper plate, or an iron plate, frames formed from a plate obtained by subjecting the surface thereof to an oxidation treatment, a frame formed from a stainless steel plate, and a frame formed from a brass plate.

The coating machine for applying the slurry to the substrate is not particularly limited, and for example, a roll coater, a gravure coater, a die coater, a curtain coater, an air doctor coater, or the like can be used. A die coater, a curtain coater, and a spray coater are particularly preferable because the thickness of the sheet can be made more uniform.

After the slurry is applied to the substrate, the slurry is dried by a dryer. The drying temperature can be, for example, 30°C or higher and 150°C or lower, and can be 40°C or higher and 120°C or lower.

[Step of forming cationic layer]

The step of forming a cationic layer is performed using a solution containing the above cationic compound and other components. As the solvent of the solution, for example, solvents such as methanol, ethanol, isopropyl alcohol, ethylene glycol, dimethyl sulfoxide (DMSO), acetonitrile, acetic acid, and water can be used. The above solution is applied to the fine fibrous cellulose-containing sheet in the same manner as in the step of preparing a fine fibrous cellulose-containing sheet, and dried to form a cationic layer, whereby the laminate of the present embodiment having the fine fibrous cellulose-containing sheet as a fine fibrous cellulose-containing layer and the cationic layer on the fine fibrous cellulose-containing layer can be obtained.

The laminate of the present embodiment is less susceptible to adherence of dirt such as dust and has excellent laser cutter processability, and thus can be applied to various applications. Specifically, for example, the laminate of the present embodiment is suitable for applications of light transmissive substrates of various display devices, solar cells, and the like. In addition, the laminate of the present embodiment is also applicable to applications such as substrates of electronic devices, members of home electric appliances, window materials of various vehicles and building materials, interior materials, exterior materials, packaging materials, and members of medical devices.

## Examples

The features of the present invention will be described more specifically below with reference to Examples and

Comparative Examples. The materials, amounts to be used, ratios, contents of treatment, procedures of treatment, and the like described in the following Examples can be appropriately changed without departing from the gist of the present invention. Therefore, the scope of the present invention should not be interpreted as being limited by the specific examples described below.

<Production Example A>

[Phosphorylation treatment]

As a raw material pulp, softwood kraft pulp (undried) manufactured by Oji Paper Co., Ltd. was used. The raw material pulp was subjected to phosphorylation treatment in the following way. Firstly, a mixed aqueous solution of ammonium dihydrogen phosphate and urea was added to 100 parts by mass (absolute dry mass) of the above raw material pulp, the resultant mixture was adjusted so that the content of the ammonium dihydrogen phosphate was 45 parts by mass, the content of urea was 120 parts by mass, and the content of water was 150 parts by mass, and chemical solution-impregnated pulp was obtained. Next, the obtained chemical solution-impregnated pulp was heated in a hot-air drying device at 165°C for 250 seconds, thereby a phosphate group was introduced into cellulose in the pulp, and phosphorylated pulp was obtained.

[Washing treatment]

Next, the obtained phosphorylated pulp was subjected to a washing treatment. The washing treatment was performed by repeating an operation of stirring a pulp dispersion obtained by pouring 10 L of ion-exchanged water into 100 g (absolute dry mass) of the phosphorylated pulp such that the pulp was uniformly dispersed, and then filtering and dehydrating the pulp dispersion. Washing was terminated when an electric conductivity of the filtrate reached 100 μS/cm or less.

[Neutralization treatment]

Next, the phosphorylated pulp after washing was subjected to a neutralization treatment as follows. Firstly, the phosphorylated pulp after washing was diluted with 10 L of ion exchanged water, and then 1 N of a sodium hydroxide aqueous solution was added little by little while the mixture was stirred, and thereby, a phosphorylated pulp slurry with a pH of 12 or higher and 13 or lower was obtained. Next, the phosphorylated pulp slurry was dehydrated, and a neutralized phosphorylated pulp was obtained. Next, the phosphorylated pulp after the neutralization treatment was subjected to the above washing treatment.

The phosphorus-oxo-oxidized pulp thus obtained was subjected to measurement of infrared absorption spectrum by FT-IR. As a result, absorption based on P=O of a phosphate group was observed in the vicinity of 1,230 $cm^{-1}$, which confirmed that the phosphate group was added to the pulp. In addition, the obtained phosphorylated pulp was supplied to a test and was analyzed with an X-ray diffraction apparatus. As a result, typical peaks were confirmed at two positions in the vicinity of $2\theta$=14° or more and 17° or less, and in the vicinity of $2\theta$=22° or more and 23° or less, and it was confirmed that the phosphorylated pulp had a cellulose type I crystal structure.

[Defibration treatment]

Ion-exchanged water was added to the obtained phosphorylated pulp to prepare a slurry having a solid content concentration of 2% by mass. This slurry was treated six times with a wet atomization device (STAR BURST manufactured by Sugino Machine Limited) at a pressure of 200 MPa to obtain a fine fibrous cellulose dispersion A containing a fine fibrous cellulose. The fiber width of the fine fibrous cellulose was measured using a transmission electron microscope and found to be 2 to 5 nm. The number average fiber width of the fine fibrous cellulose measured by [Measurement of number average fiber width] described later was 3 nm. It was confirmed by X-ray diffraction that the fine fibrous cellulose maintained the cellulose type I crystal structure. Note that the amount of phosphate groups (first dissociated acid amount (strongly acidic group amount)) was 1.45 mmol/g, which was measured by the measurement method described in the measurement of [Amount of phosphorus oxoacid groups] described later. Note that the total dissociated acid amount was 2.45 mmol/g.

<Production Example B>

After the neutralization treatment of the phosphorylated pulp of Production Example A, the following treatment was performed to obtain a substituent-removed fine fibrous cellulose dispersion containing a substituent-removed fine fibrous cellulose.

[Nitrogen removal treatment]

Ion-exchanged water was added to the phosphorylated pulp to prepare a slurry having a solid content concentration of 4% by mass. A 48% by mass sodium hydroxide aqueous solution was added to the slurry to adjust the pH of the slurry to 13.4, and the slurry was heated for 1 hour under the condition that the liquid temperature was 85°C. Thereafter, the pulp slurry was dehydrated, and an operation of stirring a pulp dispersion obtained by pouring 10 L of ion-exchanged water into 100 g (absolute dry mass) of the phosphorylated pulp so that the pulp was uniformly dispersed, and then filtering and dehydrating the pulp dispersion was repeated to remove excessive sodium hydroxide. Removal was terminated when an electric conductivity of the filtrate reached 100 μS/cm or less.

The phosphorus-oxo-oxidized pulp thus obtained was subjected to measurement of infrared absorption spectrum by FT-IR. As a result, absorption based on P=O of a phosphate group was observed in the vicinity of 1,230 $cm^{-1}$, which confirmed that the phosphate group was added to the pulp.

[Defibration treatment]

Ion-exchanged water was added to the obtained phosphorylated pulp to prepare a slurry having a solid content concentration of 2% by mass. This slurry was treated six times with a wet atomization device (STAR BURST manufactured by Sugino Machine Limited) at a pressure of 200 MPa to obtain a fine fibrous cellulose dispersion containing a fine fibrous cellulose. The fiber width of the fine fibrous cellulose was measured using a transmission electron microscope and found to be 2 to 5 nm. It was confirmed by X-ray diffraction that the obtained fine fibrous cellulose maintained the cellulose type I crystal structure. Note that the amount of phosphate groups (first dissociated acid amount strongly acidic group amount) was 1.35 mmol/g, which was measured by the measurement method described in [Measurement of amount of phosphorus oxoacid groups] described later. Note that the total dissociated acid amount was 2.30 mmol/g.

[Substituent removal treatment (high temperature heat treatment)]

A 1.0% by mass citric acid aqueous solution was added to the fine fibrous cellulose dispersion to adjust the pH of the dispersion to 5.5. The obtained slurry was placed in a pressure-resistant container and heated at a liquid temperature of 160°C for 15 minutes. At this time, the slurry was heated until the amount of phosphate groups reached 0.08 mmol/g. Generation of aggregates of the fine fibrous cellulose was confirmed by this operation.

[Washing treatment of slurry after substituent removal]

The same amount of ion-exchanged water as the slurry was added to the heated slurry to form a slurry having a solid content concentration of about 1% by mass. The slurry was washed by repeating an operation of stirring the slurry and then filtering and dehydrating the slurry. When the electric conductivity of the filtrate reached 10 μS/cm or less, ion-exchanged water was added again to the slurry to form a slurry having a solid content concentration of about 1% by mass, and the slurry was allowed to stand for 24 hours. Thereafter, an operation of filtering and dehydrating the slurry was further repeated, and the time point at which the electric conductivity of the filtrate reached 10 μS/cm or less again was defined as the washing end point. Ion-exchanged water was added to the obtained aggregates of the fine fibrous cellulose to obtain a slurry after substituent removal. The solid content concentration of this slurry was 1.7% by mass.

[Uniform dispersion of slurry after substituent removal]

Ion-exchanged water was added to the obtained slurry after substituent removal to form a slurry having a solid content concentration of 1.0% by mass. Then, the slurry was treated three times with a wet atomization device (STAR BURST manufactured by Sugino Machine Limited) at a pressure of 200 MPa to obtain a substituent-removed fine fibrous cellulose dispersion B containing a substituent-removed fine fibrous cellulose. The fiber width of the fine fibrous cellulose was measured using a transmission electron microscope and found to be 2 to 5 nm. The number average fiber width of the substituent-removed fine fibrous cellulose measured by [Measurement of number average fiber width] described later was 4 nm.

<Production Example C>

[TEMPO oxidation treatment]

As a raw material pulp, softwood kraft pulp (undried) manufactured by Oji Paper Co., Ltd. was used. This raw material pulp was subjected to an alkaline TEMPO oxidation treatment as follows.

First, 100 parts by mass (dry mass) of the raw material pulp, 1.6 parts by mass of TEMPO (2,2,6,6-tetramethylpiperidine-1-oxyl), and 10 parts by mass of sodium bromide were dispersed in 10,000 parts by mass of water. Then, a 13% by mass sodium hypochlorite aqueous solution was added to the dispersion so as to be 3.8 mmol with respect to 1.0 g of pulp to start a reaction. During the reaction, a 0.5 M sodium hydroxide aqueous solution was added dropwise to maintain the pH at 10 or more and 10.5 or less, and the time point at which no change in pH was observed was considered to be the reaction end.

[Washing treatment]

Next, the obtained TEMPO-oxidized pulp was subjected to a washing treatment. The washing treatment was performed by dehydrating the pulp slurry after the TEMPO oxidation to obtain a dehydrated sheet, and then repeating an operation of pouring 5,000 parts by mass of ion-exchanged water into the dehydrated sheet, stirring the dispersion to uniformly disperse the pulp, and then filtering and dehydrating the pulp dispersion. Washing was terminated when an electric conductivity of the filtrate reached 100 μS/cm or less.

The obtained TEMPO-oxidized pulp was supplied to a test and was analyzed with an X-ray diffraction apparatus. As a result, typical peaks were confirmed at two positions in the vicinity of $2\theta=14°$ or more and 17° or less, and in the vicinity of $2\theta=22°$ or more and 23° or less, and it was confirmed that the TEMPO-oxidized pulp had a cellulose type I crystal structure. In addition, it was confirmed by X-ray diffraction that the obtained fibrous cellulose maintained the cellulose type I crystal structure.

[Defibration treatment]

A fine fibrous cellulose dispersion C containing a fine fibrous cellulose was obtained in the same manner as in Production Example A except that the above TEMPO-oxidized pulp was used in [Defibration treatment] of Production Example A.

The fiber width of the fine fibrous cellulose in the fine fibrous cellulose dispersion C was measured using a transmission electron microscope and found to be 2 to 5 nm. The number average fiber width of the fine fibrous cellulose measured by [Measurement of number average fiber width] described later was 3 nm. It was confirmed by X-ray diffraction that the fine fibrous cellulose maintained the cellulose type I crystal structure. The amount of carboxy groups measured by the method described in [Measurement of amount of carboxy groups] described later was 1.80 mmol/g.

<Production Example D>

[Phosphorous acid treatment]

A fine fibrous cellulose dispersion D containing a phosphorous acid-treated pulp and a fine fibrous cellulose was obtained in the same manner as in Production Example A except that 33 parts by mass of phosphorous acid (phosphonic acid) was used instead of ammonium dihydrogen phosphate in [Phosphorylation treatment] of Production Example A.

The obtained phosphorous acid-treated pulp was subjected to infrared absorption spectrum measurement using FT-IR. As a result, absorption based on P=O of a phosphonic acid group which is a tautomer of a phosphorous acid group was observed in the vicinity of 1,210 $cm^{-1}$, and it was confirmed that the phosphorous acid group (phosphonic acid group) was added to the pulp. The fiber width of the fine fibrous cellulose was measured using a transmission electron microscope and found to be 2 to 5 nm. The number average fiber width of the fine fibrous cellulose measured by [Measurement of number average fiber width] described later was 3 nm. In addition, it was confirmed by X-ray diffraction that the obtained fine fibrous cellulose maintained the cellulose type I crystal structure. Note that the amount of phosphorous acid groups (first dissociated acid amount) was 1.51 mmol/g, which was measured by the measurement method described in [Measurement of amount of phosphorus oxoacid groups] described later, and the total dissociated acid amount was 1.54 mmol/g.

<Production Example E>

A substituent-removed fine fibrous cellulose dispersion E containing a substituent-removed fine fibrous cellulose was obtained by performing a substituent removal treatment in the same manner as in Production Example B except that the phosphorous acid-treated fine fibrous cellulose of Production Example D was used. The fiber width of the fine fibrous cellulose was measured using a transmission electron microscope and found to be 2 to 5 nm. The number average fiber width of the substituent-removed fine fibrous cellulose measured by [Measurement of number average fiber width] described later was 4 nm.

<Production Example F>

[Sulfur oxo oxidation treatment]

A fine fibrous cellulose dispersion F containing a sulfated pulp and a fine fibrous cellulose was obtained in the same manner as in Production Example A except that 38 parts by mass of amidosulfuric acid (sulfamic acid) was used instead of ammonium dihydrogen phosphate in [Phosphorylation treatment] of Production Example A and the heating time was extended to 20 minutes.

The sulfated pulp thus obtained was subjected to measurement of infrared absorption spectrum by FT-IR. As a result, absorption based on a sulfuric acid group (sulfur oxoacid group) was observed in the vicinity of 1,220 to 1,260 $cm^{-1}$, and it was confirmed that a sulfuric acid group (sulfur oxoacid group) was added to the pulp. The fiber width of the fine fibrous cellulose was measured using a transmission electron microscope and found to be 2 to 5 nm. The number average fiber width of the fine fibrous cellulose measured by [Measurement of number average fiber width] described later was 3 nm. In addition, it was confirmed by X-ray diffraction that the obtained fine fibrous cellulose maintained the cellulose type I crystal structure. The amount of sulfur oxoacid groups measured by the measurement method described in [Measurement of amount of sulfur oxoacid groups] described later was 1.47 mmol/g.

<Production Example G>

A substituent-removed fine fibrous cellulose dispersion G containing a substituent-removed fine fibrous cellulose was obtained by performing a substituent removal treatment in the same manner as in Production Example B except that the sulfur-oxo-oxidized fine fibrous cellulose of Production Example F was used. The fiber width of the fine fibrous cellulose was measured using a transmission electron microscope and found to be 2 to 5 nm. The number average fiber width of the substituent-removed fine fibrous cellulose measured by [Measurement of number average fiber width] described later was 4 nm.

<Production Example H>

[Unmodified]

Softwood kraft pulp (undried) manufactured by Oji Paper Co., Ltd. was used as a raw material pulp to prepare a slurry having a solid content concentration of 2% by mass. This slurry was subjected to a refiner treatment to be beaten (pre-defibrated) until the CSF reached 50 mL or less. The pre-beaten unmodified pulp fibers were treated six times with a wet atomization device (STAR BURST manufactured by Sugino Machine Limited) at a pressure of 200 MPa to obtain an unmodified fine fibrous cellulose (unmodified CNF) dispersion H. The fiber width of the fine fibrous cellulose was measured using a transmission electron microscope and found to be 10 to 50 nm. The fiber width of the fine fibrous cellulose measured by [Measurement of number average fiber width] described later was 30 nm.

<Measurement>

[Measurement of amount of phosphorus oxoacid groups]

In the measurement of the amount of phosphorus oxoacid groups (equal to the amount of phosphorus oxoacid groups of the phosphorus-oxo-oxidized (phosphorylated or phosphorous acid-treated) pulp), ion-exchanged water was added to a fine fibrous cellulose dispersion containing a fine fibrous cellulose as a target to prepare a slurry having a fine fibrous cellulose content of 0.2% by mass. The obtained slurry was treated with an ion exchange resin, and then subjected to titration with an alkali, thereby performing measurement.

The treatment with an ion exchange resin was performed by adding a strongly acidic ion exchange resin (Amberjet 1024; manufactured by Organo Corporation, conditioned) having a volume of 1/10 to the fine fibrous cellulose-containing slurry, shaking the mixture for 1 hour, then pouring the resultant mixture onto a mesh having an opening of 90 μm, and separating the ion exchange resin and the slurry.

The titration using an alkali was performed by measuring a change in a pH value indicated by the slurry while adding 10 μL of a 0.1 N sodium hydroxide aqueous solution to the fine fibrous cellulose-containing slurry after the treatment with the ion exchange resin every five seconds. Titration was performed while nitrogen gas was blown into the slurry from 15 minutes before the start of titration. In this neutralization titration, two points at which the increment (differential value of a pH with respect to the amount of the alkali added dropwise) is maximum are observed in the curve obtained by plotting a measured pH with respect to the amount of the alkali added. Out of these points, a maximum point of the increment obtained first after addition of the alkali is referred to as a first end point, and a maximum point of the

increment obtained next is referred to as a second end point (Fig. 1). The alkali amount required from the start of titration to the first end point is equal to the first dissociated acid amount in the slurry used for titration. In addition, the alkali amount required from the start of titration to the second end point is equal to the total dissociated acid amount in the slurry used for titration. Note that a value obtained by dividing the alkali amount (mmol) required from the start of titration to the first end point by the solid content (g) in the slurry to be titrated was defined as the amount of phosphorus oxoacid groups (mmol/g). In addition, a value obtained by dividing the alkali amount (mmol) required from the start of titration to the second end point by the solid content (g) in the slurry to be titrated was defined as the total dissociated acid amount (mmol/g).

The amount of phosphorus oxoacid groups (amount of phosphorus oxoacid groups introduced) (mmol/g) indicates the amount of substituents per 1 g of the mass of the fine fibrous cellulose when the counter ion of the phosphorus oxoacid group is a hydrogen ion ($H^+$).

[Measurement of amount of carboxy groups]

The amount of carboxy groups in the fine fibrous cellulose (equal to the amount of carboxy groups in the TEMPO oxidized pulp) was measured by adding ion-exchanged water to a fine fibrous cellulose dispersion containing a fine fibrous cellulose as a target such that the content of the fine fibrous cellulose was 0.2% by mass, performing a treatment with an ion exchange resin, and then performing titration using an alkali.

The treatment with an ion exchange resin was performed by adding a strongly acidic ion exchange resin (Amberjet 1024; manufactured by Organo Corporation, conditioned) having a volume of 1/10 to the 0.2% by mass fine fibrous cellulose-containing slurry, shaking the mixture for 1 hour, then pouring the resultant mixture onto a mesh having an opening of 90 μm, and separating the ion exchange resin and the slurry.

The titration using an alkali was performed by measuring a change in a pH value indicated by the slurry while adding a 0.1 N sodium hydroxide aqueous solution to the fine fibrous cellulose-containing slurry after the treatment with the ion exchange resin. When a change in pH is observed while a sodium hydroxide aqueous solution is added, a titration curve as indicated in Fig. 2 is obtained. As illustrated in Fig. 2, in this neutralization titration, one point at which the increment (differential value of a pH with respect to the amount of the alkali added dropwise) is maximum is observed in the curve obtained by plotting a measured pH with respect to the amount of the alkali added. The maximum point of this increment is referred to as a first end point. Here, a region ranging from the start of titration to the first end point in Fig. 2 is referred to as a first region. The alkali amount required for the first region is equal to the amount of carboxy groups in the slurry used for titration. Then, the alkali amount (mmol) required for the first region of the titration curve was divided by the solid content (g) in the fine fibrous cellulose-containing slurry to be titrated, thereby calculating the amount of carboxy groups introduced (mmol/g).

The amount of carboxy groups introduced (mmol/g) indicates the amount of substituents per 1 g of the mass of the fine fibrous cellulose when the counter ion of the carboxy group is a hydrogen ion ($H^+$).

[Measurement of amount of sulfur oxoacid groups]

In the measurement of the amount of sulfur oxoacid groups in the fine fibrous cellulose, a sample after freeze drying and pulverization treatment was subjected to hydrothermal decomposition using sulfuric acid in a sealed container and then diluted appropriately, and the amount of sulfur was measured by inductively coupled plasma optical emission spectrometry (ICP-OES). A value calculated by dividing the amount of sulfur by the absolute dry mass of the fine fibrous cellulose supplied to a test was defined as the amount of sulfur oxoacid groups (mmol/g) of the fine fibrous cellulose.

[Measurement of number average fiber width]

The fiber width of the fine fibrous cellulose was measured by the following method. Each fine fibrous cellulose dispersion was diluted with water so that the concentration of cellulose was 0.01% by mass or more and 0.1% by mass or less, and the diluted dispersion was cast onto a carbon membrane-coated grid subjected to a hydrophilization treatment. This was dried, then stained with uranyl acetate, and observed with a transmission electron microscope (TEM, JEOL-2000EX, manufactured by JEOL Ltd.). At this time, arbitrary axes each having a width of the image were assumed in the obtained image in the vertical and horizontal directions, and the magnification was adjusted so that six or more fibers intersect each axis. After an observation image satisfying this condition was obtained, two random axes were drawn in each of the vertical and horizontal directions per image, and the fiber width of a fiber intersecting the axis was visually read. For each dispersion, six non-overlapping observation images were taken, and the values of fiber widths of fibers intersecting each of the two axes were read (6 or more $\times$ 2 $\times$ 6 = 72 or more). The number average fiber width was calculated from the fiber widths thus obtained.

<Example 1>

[Preparation of fine fibrous cellulose-containing sheet]

Polyethylene oxide (PEO-18P, manufactured by Sumitomo Seika Chemicals Co., Ltd., viscosity average molecular weight: 4.3 million to 4.8 million) was added to ion-exchanged water such that the solid content concentration was 2.0% by mass, and the mixture was stirred at 25°C for 30 minutes to obtain a polyethylene oxide aqueous solution.

The fine fibrous cellulose dispersion B and the polyethylene oxide aqueous solution were each diluted with ion-exchanged water such that the solid content concentration was 1.0% by mass. Then, the polyethylene oxide aqueous solution was added to the fine fibrous cellulose dispersion B such that the amount of polyethylene oxide was 20 parts by mass with respect to 100 parts by mass of the fine fibrous cellulose in the fine fibrous cellulose dispersion B to obtain a mixed liquid. Furthermore, the mixed liquid was weighed so that the finished basis weight of the fine fibrous cellulose-containing sheet was 35 $g/m^2$, and spread onto a commercially available acrylic plate. A damming frame (inner dimension: 180 mm × 180 mm, height: 50 mm) was disposed on the acrylic plate so that a predetermined thickness was obtained. Thereafter, the mixed liquid was dried in a dryer set at 70°C, and the resultant sheet was peeled off from the acrylic plate to obtain a fine fibrous cellulose-containing sheet.

[Formation of cationic layer]

Polyethyleneimine (Nacalai Tesque, Inc.) was diluted with water to obtain a polyethyleneimine solution (solid content concentration: 0.25% by mass). The polyethyleneimine solution was applied to one surface of the fine fibrous cellulose-containing sheet prepared in [Preparation of fine fibrous cellulose-containing sheet] with a bar coater such that the finished basis weight of the cationic layer was 62.5 $mg/m^2$. Thereafter, the applied solution was dried in a dryer set at 70°C to obtain a laminate (layer configuration: cationic layer (thickness: about 60 nm)-fine fibrous cellulose-containing layer (thickness: 23 μm)).

<Example 2>

A laminate (layer configuration: cationic layer (thickness: about 6 nm)-fine fibrous cellulose-containing layer (thickness: 23 μm)) was obtained in the same manner as in Example 1 except that the finished basis weight of the cationic layer was 6.25 $mg/m^2$ in [Formation of cationic layer] of Example 1.

<Example 3>

A laminate (layer configuration: cationic layer (thickness: about 0.6 nm)-fine fibrous cellulose-containing layer (thickness: 23 μm)) was obtained in the same manner as in Example 1 except that the finished basis weight of the cationic layer was 0.625 $mg/m^2$ in [Formation of cationic layer] of Example 1.

<Example 4>

A laminate (layer configuration: cationic layer (thickness: about 60 nm)-fine fibrous cellulose-containing layer (thickness: 23 μm)) was obtained in the same manner as in Example 1 except that polyethyleneimine (Nacalai Tesque, Inc.) was changed to polyethyleneimine (SP-200, Nippon Shokubai Co., Ltd.) in [Formation of cationic layer] of Example 1.

<Example 5>

A laminate (layer configuration: cationic layer (thickness: 60 nm)-fine fibrous cellulose-containing layer (thickness: 23 μm)) was obtained in the same manner as in Example 1 except that polyethyleneimine (Nacalai Tesque, Inc.) was changed to polyallylamine (PAA-03, Nittobo Medical Co., Ltd.) in [Formation of cationic layer] of Example 1.

<Example 6>

A laminate (layer configuration: cationic layer (thickness: 60 nm)-fine fibrous cellulose-containing layer (thickness: 23 μm)) was obtained in the same manner as in Example 1 except that polyethyleneimine (Nacalai Tesque, Inc.) was changed to polyallylamine (PAA-15C, Nittobo Medical Co., Ltd.) in [Formation of cationic layer] of Example 1.

<Example 7>

A laminate (layer configuration: cationic layer (thickness: 60 nm)-fine fibrous cellulose-containing layer (thickness: 23 μm)) was obtained in the same manner as in Example 1 except that polyethyleneimine (Nacalai Tesque, Inc.) was

changed to polyallylamine (PAA-10L-10C, Nittobo Medical Co., Ltd.) in [Formation of cationic layer] of Example 1.

<Example 8>

A laminate (layer configuration: cationic layer (thickness: 60 nm)-fine fibrous cellulose-containing layer (thickness: 23 μm)) was obtained in the same manner as in Example 1 except that polyethyleneimine (Nacalai Tesque, Inc.) was changed to α-polylysine (Nacalai Tesque, Inc.) in [Formation of cationic layer] of Example 1.

<Example 9>

A laminate (layer configuration: cationic layer (thickness: 60 nm)-fine fibrous cellulose-containing layer (thickness: 23 μm)) was obtained in the same manner as in Example 1 except that polyethyleneimine (Nacalai Tesque, Inc.) was changed to ε-polylysine (Nacalai Tesque, Inc.) in [Formation of cationic layer] of Example 1.

<Example 10>

A laminate (layer configuration: cationic layer (thickness: 60 nm)-fine fibrous cellulose-containing layer (thickness: 23 μm)) was obtained in the same manner as in Example 1 except that polyethyleneimine (Nacalai Tesque, Inc.) was changed to a cationized starch (Nippon Starch Chemical Co., Ltd.) in [Formation of cationic layer] of Example 1.

<Example 11>

[Formation of cationic layer]

Dodecyltrimethylammonium chloride (DTMAC, Fujifilm Wako Pure Chemical Corporation) was dissolved in water such that the solid content concentration was 1%. Subsequently, the polyethylene oxide aqueous solution prepared in Example 1 was added to the DTMAC solution such that the amount of polyethylene oxide was 30 parts by mass with respect to 70 parts by mass of DTMAC in the DTMAC solution to obtain a mixed liquid. Furthermore, the mixed liquid was diluted with water to obtain a DTMAC solution (solid content concentration of DTMAC: 0.25% by mass).

The DTMAC solution was applied to one surface of the fine fibrous cellulose-containing sheet prepared in the same manner as in Example 1 [Preparation of fine fibrous cellulose-containing sheet] using a bar coater so that the finished basis weight of the cationic layer was 89.3 mg/$m^2$ (the basis weight of DTMAC was 62.5 mg/$m^2$). Thereafter, the applied solution was dried in a dryer set at 70°C to obtain a laminate (layer configuration: cationic layer (thickness: about 90 nm)-fine fibrous cellulose-containing layer (thickness: 23 μm)).

<Example 12>

A laminate (layer configuration: cationic layer (thickness: 60 nm)-fine fibrous cellulose-containing layer (thickness: 23 μm)-PET film layer (thickness: 250 μm)) was obtained in the same manner as in Example 1 except that a PET film (COSMOSHINE A4360, manufactured by Toyobo Co., Ltd., thickness: 250 μm, basis weight: 350 g/$m^2$) was used instead of the acrylic plate in [Preparation of fine fibrous cellulose-containing sheet] of Example 1, and the sheet was not peeled off after drying.

<Example 13>

A laminate (layer configuration: cationic layer (thickness: 60 nm)-fine fibrous cellulose-containing layer (thickness: 23 μm)) was obtained in the same manner as in Example 1 except that the fine fibrous cellulose dispersion A was used instead of the fine fibrous cellulose dispersion B in [Preparation of fine fibrous cellulose-containing sheet] of Example 1.

<Example 14>

A laminate (layer configuration: cationic layer (thickness: 60 nm)-fine fibrous cellulose-containing layer (thickness: 23 μm)-PET film layer (thickness: 250 μm)) was obtained in the same manner as in Example 12 except that the fine fibrous cellulose dispersion A was used instead of the fine fibrous cellulose dispersion B in Example 12.

<Example 15>

A laminate (layer configuration: cationic layer (thickness: 60 nm)-fine fibrous cellulose-containing layer (thickness: 23 μm)) was obtained in the same manner as in Example 1 except that the fine fibrous cellulose dispersion C was used instead of the fine fibrous cellulose dispersion B in [Preparation of fine fibrous cellulose-containing sheet] of Example 1.

<Example 16>

A laminate (layer configuration: cationic layer (thickness: 60 nm)-fine fibrous cellulose-containing layer (thickness: 23 μm)) was obtained in the same manner as in Example 1 except that the fine fibrous cellulose dispersion D was used instead of the fine fibrous cellulose dispersion B in [Preparation of fine fibrous cellulose-containing sheet] of Example 1.

<Example 17>

A laminate (layer configuration: cationic layer (thickness: 60 nm)-fine fibrous cellulose-containing layer (thickness: 23 μm)) was obtained in the same manner as in Example 1 except that the fine fibrous cellulose dispersion F was used instead of the fine fibrous cellulose dispersion B in [Preparation of fine fibrous cellulose-containing sheet] of Example 1.

<Example 18>

A laminate (layer configuration: cationic layer (thickness: 60 nm)-fine fibrous cellulose-containing layer (thickness: 23 μm)) was obtained in the same manner as in Example 1 except that the obtained fine fibrous cellulose dispersion E was used instead of the fine fibrous cellulose dispersion B in [Preparation of fine fibrous cellulose-containing sheet] of Example 1.

<Example 19>

A laminate (layer configuration: cationic layer (thickness: 60 nm)-fine fibrous cellulose-containing layer (thickness: 23 μm)) was obtained in the same manner as in Example 1 except that the obtained fine fibrous cellulose dispersion G was used instead of the fine fibrous cellulose dispersion B in [Preparation of fine fibrous cellulose-containing sheet] of Example 1.

<Example 20>

A laminate (layer configuration: cationic layer (thickness: 60 nm)-fine fibrous cellulose-containing layer (thickness: 23 μm)) was obtained in the same manner as in Example 1 except that the obtained fine fibrous cellulose dispersion H was used instead of the fine fibrous cellulose dispersion B in [Preparation of fine fibrous cellulose-containing sheet] of Example 1.

<Comparative Example 1>

A fine fibrous cellulose-containing sheet (thickness: 23 μm) was obtained in the same manner as in Example 1 except that [Formation of cationic layer] was not performed in Example 1.

<Comparative Example 2>

A fine fibrous cellulose-containing sheet (thickness: 23 μm) was obtained in the same manner as in Example 13 except that [Formation of cationic layer] was not performed in Example 13.

<Comparative Example 3>

A fine fibrous cellulose-containing sheet (thickness: 23 μm) was obtained in the same manner as in Example 15 except that [Formation of cationic layer] was not performed in Example 15.

<Comparative Example 4>

A fine fibrous cellulose-containing sheet (thickness: 23 μm) was obtained in the same manner as in Example 16 except that [Formation of cationic layer] was not performed in Example 16.

<Comparative Example 5>

A fine fibrous cellulose-containing sheet (thickness: 23 μm) was obtained in the same manner as in Example 17 except that [Formation of cationic layer] was not performed in Example 17.

<Comparative Example 6>

A fine fibrous cellulose-containing sheet (thickness: 23 μm) was obtained in the same manner as in Example 18 except that [Formation of cationic layer] was not performed in Example 18.

<Comparative Example 7>

A fine fibrous cellulose-containing sheet (thickness: 23 μm) was obtained in the same manner as in Example 19 except that [Formation of cationic layer] was not performed in Example 19.

<Comparative Example 8>

A fine fibrous cellulose-containing sheet (thickness: 23 μm) was obtained in the same manner as in Example 20 except that [Formation of cationic layer] was not performed in Example 20.

<Comparative Example 9>

A PET film (COSMOSHINE A4360, manufactured by Toyobo Co., Ltd., thickness: 250 μm) was used.

<Comparative Example 10>

A laminate (layer configuration: fine fibrous cellulose-containing layer (thickness: 23 μm)-PET film layer (thickness: 250 μm)) was obtained in the same manner as in Example 12 except that [Formation of cationic layer] was not performed in Example 12.

<Comparative Example 11>

A laminate (layer configuration: fine fibrous cellulose-containing layer (thickness: 23 μm)-PET film layer (thickness: 250 μm)) was obtained in the same manner as in Example 14 except that [Formation of cationic layer] was not performed in Example 14.

<Measurement and evaluation of characteristic values>

[Total light transmittance]

A 50 mm square test piece was cut out from the laminate, the fine fibrous cellulose-containing sheet, or the PET film. Using this test piece, the total light transmittance was measured using a haze meter (HM-150, manufactured by Murakami Color Research Laboratory Co., Ltd.) in accordance with JIS K7361-1:1997. The results are shown in Table 1.

[Haze]

A 50 mm square test piece was cut out from the laminate, the fine fibrous cellulose-containing sheet, or the PET film. Using this test piece, the haze was measured using a haze meter (HM-150, manufactured by Murakami Color Research Laboratory Co., Ltd.) in accordance with JIS K7136:2000. The results are shown in Table 1.

[Tensile strength]

A test piece having a length of 80 mm and a width of 10 mm was cut out from the laminate, the fine fibrous

cellulose-containing sheet, or the PET film.

The tensile strength (unit: N/m) was measured using a tensile tester TENSILON (manufactured by A & D Company, Limited) in accordance with JIS P 8113:2006 except that the above test piece was used, and the distance between chucks was 50 mm. The tensile strength (unit: MPa) was calculated by dividing the tensile strength by the thickness of the test piece. When the tensile strength was measured, the test piece was subjected to humidity control at 23°C and a relative humidity of 50% for 24 hours and used. The results are shown in Table 1.

[Tensile elastic modulus]

A test piece having a length of 80 mm and a width of 15 mm was cut out from the laminate, the fine fibrous cellulose-containing sheet, or the PET film.

The tensile elastic modulus was measured using a tensile tester TENSILON (manufactured by A & D Company, Limited) in accordance with JIS P 8113:2006 except that the above test piece was used and the distance between chucks was 50 mm. The tensile elastic modulus is a value calculated from the value of the maximum positive slope in the SS curve. When the tensile elastic modulus was measured, the test piece was subjected to humidity control at 23°C and a relative humidity of 50% for 24 hours and used. The results are shown in Table 1.

[Linear thermal expansion coefficient]

A test piece having a width of 3 mm and a length of 30 mm was cut out from the laminate, the fine fibrous cellulose-containing sheet, or the PET film by a laser cutter. The test piece was set in a thermomechanical analyzer (TMA7100, manufactured by Hitachi High-Tech Science Corporation), and the temperature of the test piece was raised from room temperature to 180°C at 5°C/min, lowered from 180°C to 25°C at 5°C/min, and raised from 25°C to 180°C at 5°C/min in a tensile mode at a load of 10 g under a nitrogen atmosphere with a distance between chucks of 20 mm. The linear thermal expansion coefficient was obtained from the measurement value in a temperature range of 100°C to 150°C at the second temperature rise. The results are shown in Table 1.

[Water resistance (water absorption rate)]

Two 50 mm square test pieces were cut out from the laminate, the fine fibrous cellulose-containing sheet, or the PET film. One test piece was subjected to humidity control at 23°C and a relative humidity of 50% for 24 hours. The mass of the test piece subjected to humidity control was defined as Wd (g), and the mass of the other test piece after being immersed in ion-exchanged water for 24 hours was defined as W (g). The water absorption rate was determined from the following formula, and then the water resistance was evaluated according to the following criteria (A, B, C).

$$\text{Water absorption rate (\%)} = (W - Wd)/Wd \times 100$$

A: Water absorption rate: 1,000% or less
B: Water absorption rate: more than 1,000% and less than 2,000%
C: Water absorption rate: 2,000% or more

[Dust adhesion]

A 50 mm square test piece was cut out from the laminate, the fine fibrous cellulose-containing sheet, or the PET film. The entire surface of one side of the test piece was rubbed 10 times with tissue paper (hana celeb tissue, manufactured by Oji Nepia Co., Ltd.) to cause dust to adhere to the test piece. The entire surface on the cationic layer side in Examples 1 to 20, the entire surface on one side of a randomly selected test piece in Comparative Examples 1 to 9, and the entire surface on the fine fibrous cellulose-containing layer side in Comparative Examples 10 and 11 were rubbed with tissue paper. Dust was removed by spraying with a duster for 10 seconds, and the degree of adhesion of dust was visually determined.

A: There is no adhesion of dust (fiber).
B: A little dust (fiber) remains.
C: Most of dust (fiber) cannot be removed after adhesion.

"A little dust (fiber) remains" in the evaluation "B" means that the number of dust remaining on the surface of the test piece is 40% or less of the number of dust on the surface of the test piece in Comparative Example 9.

[Laser cutter processability]

A test piece having a width of 3 mm × a length of 30 mm was cut out from the laminate, the fine fibrous cellulose-containing sheet, or the PET film by a laser cutter. A change in a processed portion (a portion to which the laser cutter was applied and the vicinity of the portion) of the laminate, the fine fibrous cellulose-containing sheet, or the PET film was visually determined. For the test piece cut out from the laminate, the laser cutter was applied from the side having the cationic layer. For Comparative Examples 1 to 8, 10, and 11, the laser cutter was applied from the fine fibrous cellulose-containing layer side.

A: There is no change in the processed portion.
B: The periphery of the processed portion is whitened.

[Table 1]

Table 1

| | Fine fibrous cellulose-containing layer | | | | Cationic layer | | | Other layers | Characteristic values and evaluation of laminate or sheet | | | | | | | |
|---|---|---|---|---|---|---|---|---|---|---|---|---|---|---|---|---|
| | CNF dispersion type | Anionic group | | CNF width | Cationic compound | | Basis weight | | Transmittance | Haze | Tensile strength | Elastic modulus | Expansion coefficient | Water resistance | Dust adhesion | Processability |
| | | Type | Amount introduced mmol/g | nm | Type | Weight average molecular weight | $mg/m^2$ | | % | % | MPa | GPa | ppm/K | | | |
| Ex. 1 | B | Phosphate group | 0.08 | 2-5 | PEI | 70,000 | 62.5 | - | 91.3 | 1.8 | 123 | 10.6 | 9 | A | A | A |
| Ex. 2 | B | Phosphate group | 0.08 | 2-5 | PEI | 70,000 | 6.25 | - | 91.0 | 1.6 | 121 | 10.7 | 9 | A | A | A |
| Ex. 3 | B | Phosphate group | 0.08 | 2-5 | PEI | 70,000 | 0.625 | - | 91.1 | 1.7 | 128 | 10.3 | 9 | A | B | A |
| Ex. 4 | B | Phosphate group | 0.08 | 2-5 | PEI | 10,000 | 62.5 | - | 90.8 | 1.9 | 127 | 10.8 | 10 | A | A | A |
| Ex. 5 | B | Phosphate group | 0.08 | 2-5 | PAA | 3,000 | 62.5 | - | 90.9 | 1.8 | 125 | 10.5 | 10 | A | A | A |
| Ex. 6 | B | Phosphate group | 0.08 | 2-5 | PAA | 15,000 | 62.5 | - | 91.2 | 1.6 | 133 | 11.2 | 9 | A | A | A |
| Ex. 7 | B | Phosphate group | 0.08 | 2-5 | PAA | 100,000 | 62.5 | - | 90.5 | 1.8 | 135 | 11.3 | 9 | A | A | A |
| Ex. 8 | B | Phosphate group | 0.08 | 2-5 | α-Polylysine | 4,700 | 62.5 | - | 91.7 | 1.8 | 133 | 10.8 | 10 | A | A | A |
| Ex. 9 | B | Phosphate group | 0.08 | 2-5 | ε-Polylysine | 4,700 | 62.5 | - | 92.1 | 1.8 | 122 | 10.5 | 10 | A | A | A |
| Ex. 10 | B | Phosphate group | 0.08 | 2-5 | Cationized starch | N.D.* | 62.5 | - | 90.8 | 1.8 | 126 | 10.9 | 10 | A | A | A |
| Ex. 11 | B | Phosphate group | 0.08 | 2-5 | DTMAC | 264 | 62.5 | - | 90.2 | 2.0 | 121 | 10.2 | 9 | A | B | A |
| Ex. 12 | B | Phosphate group | 0.08 | 2-5 | PEI | 70,000 | 62.5 | PET | 89.7 | 2.0 | 170 | 5.2 | 65 | A | A | A |
| Ex. 13 | A | Phosphate group | 1.45 | 2-5 | PEI | 70,000 | 62.5 | - | 92.1 | 1.8 | 123 | 11.0 | 9 | C | A | A |

(continued)

| | Fine fibrous cellulose-containing layer | | | | Cationic layer | | | Other layers | Characteristic values and evaluation of laminate or sheet | | | | | | | |
|---|---|---|---|---|---|---|---|---|---|---|---|---|---|---|---|---|
| | CNF dispersion type | Anionic group | | CNF width | Cationic compound | | Basis weight | | Transmittance | Haze | Tensile strength | Elastic modulus | Expansion coefficient | Water resistance | Dust adhesion | Processability |
| | | Type | Amount introduced mmol/g | nm | Type | Weight average molecular weight | mg/m$^2$ | | % | % | MPa | GPa | ppm/K | | | |
| Ex. 14 | A | Phosphate group | 1.45 | 2-5 | PEI | 70,000 | 62.5 | PET | 89.9 | 1.9 | 170 | 5.2 | 65 | B | A | A |
| Ex. 15 | C | Carboxy group | 1.80 | 2-5 | PEI | 70,000 | 62.5 | - | 90.5 | 1.9 | 124 | 10.9 | 9 | C | A | A |
| Ex. 16 | D | Phosphorous acid group | 1.51 | 2-5 | PEI | 70,000 | 62.5 | - | 90.8 | 1.6 | 125 | 10.6 | 10 | C | A | A |
| Ex. 17 | F | Sulfur oxoacid group | 1.47 | 2-5 | PEI | 70,000 | 62.5 | - | 91.2 | 1.8 | 123 | 10.7 | 9 | C | A | A |
| Ex. 18 | E | Phosphorous acid group | 0.08 | 2-5 | PEI | 70,000 | 62.5 | - | 91.2 | 1.7 | 121 | 10.2 | 9 | A | A | A |
| Ex. 19 | G | Sulfur oxoacid group | 0.08 | 2-5 | PEI | 70,000 | 62.5 | - | 90.3 | 1.8 | 125 | 10.4 | 10 | A | A | A |
| Ex. 20 | H | - | - | 10-50 | PEI | 70,000 | 62.5 | - | 85.2 | 60.2 | 121 | 10.3 | 9 | A | A | A |
| Cx. 1 | B | Phosphate group | 0.08 | 2-5 | - | - | - | - | 92.6 | 1.6 | 128 | 10.9 | 9 | A | B | B |
| Cx. 2 | A | Phosphate group | 1.45 | 2-5 | - | - | - | - | 90.9 | 1.5 | 125 | 10.3 | 9 | C | B | B |
| Cx. 3 | C | Carboxy group | 1.80 | 2-5 | - | - | - | - | 92.0 | 1.5 | 128 | 10.8 | 9 | C | B | B |
| Cx. 4 | D | Phosphorous acid group | 1.51 | 2-5 | - | - | - | - | 91.5 | 1.7 | 125 | 10.5 | 9 | C | B | B |
| Cx. 5 | F | Sulfur oxoacid group | 1.47 | 2-5 | - | - | - | - | 90.9 | 1.9 | 122 | 10.9 | 10 | C | B | B |
| Cx. 6 | E | Phosphorous acid group | 0.08 | 2-5 | - | - | - | - | 90.5 | 1.9 | 126 | 10.2 | 9 | A | B | B |

(continued)

| | Fine fibrous cellulose-containing layer | | | | Cationic layer | | | Other layers | Characteristic values and evaluation of laminate or sheet | | | | | | | |
|---|---|---|---|---|---|---|---|---|---|---|---|---|---|---|---|---|
| | CNF dispersion type | Anionic group | | CNF width | Cationic compound | | Basis weight | | Transmittance | Haze | Tensile strength | Elastic modulus | Expansion coefficient | Water resistance | Dust adhesion | Processability |
| | | Type | Amount introduced mmol/g | nm | Type | Weight average molecular weight | mg/m$^2$ | | % | % | MPa | GPa | ppm/K | | | |
| Cx. 7 | G | Sulfur oxoacid group | 0.08 | 2-5 | - | - | - | - | 91.1 | 1.6 | 124 | 10.6 | 9 | A | B | B |
| Cx. 8 | H | - | - | 10-50 | - | - | - | - | 85.7 | 60.2 | 120 | 10.4 | 9 | C | B | B |
| Cx. 9 | - | - | - | - | - | - | - | PET | 90.8 | 1.1 | 170 | 4.5 | 77 | A | C | B |
| Cx. 10 | B | Phosphate group | 0.08 | 2-5 | - | - | - | PET | 90.7 | 1.3 | 170 | 5.1 | 65 | A | B | B |
| Cx. 11 | A | Phosphate group | 1.45 | 2-5 | - | - | - | PET | 91.2 | 1.2 | 169 | 5.2 | 66 | B | B | B |

(Explanation of terms in Tables)

Ex.: Example
Cx.: Comparative Example
Transmittance: total light transmittance
Elastic modulus: tensile elastic modulus
Expansion coefficient: linear thermal expansion coefficient
Processability: laser cutter processability
DTMAC: dodecyltrimethylammonium chloride
(For DTMAC, the molecular weight is described in the column of the weight average molecular weight.)
CNF: fine fibrous cellulose
PEI: polyethyleneimine
PAA: polyallylamine
PET: polyethylene terephthalate
ND: no data
-: does not contain the corresponding component.

Table 1 shows that dust is less likely to adhere to the laminate (layer configuration: cationic layer-fine fibrous cellulose-containing layer, or cationic layer-fine fibrous cellulose-containing layer-PET film layer) of the present embodiment and the laminate of the present embodiment has excellent laser cutter processability (Examples 1 to 20). On the other hand, Table 1 shows that the fine fibrous cellulose-containing sheet having no cationic layer and the laminate (fine fibrous cellulose-containing layer-PET film layer) having no cationic layer are inferior in laser cutter processability (Comparative Examples 1 to 8, 10 and 11). In addition, Table 1 also shows that dust is likely to adhere to the PET film, and the PET film is inferior in laser cutter processability (Comparative Example 9).

## Claims

**1.** A laminate comprising:

a fine fibrous cellulose-containing layer that contains a fine fibrous cellulose having a fiber width of 1 nm or more and 1,000 nm or less; and
a cationic layer that is on at least one surface of the fine fibrous cellulose-containing layer and that contains a cationic compound.

**2.** The laminate according to claim 1, wherein the fine fibrous cellulose has an anionic group.

**3.** The laminate according to claim 2, wherein the anionic group includes at least one selected from the group consisting of a phosphorus oxoacid group, a carboxy group, a sulfur oxoacid group, and a xanthate group.

**4.** The laminate according to claim 2 or 3, wherein an amount of anionic groups introduced into the fine fibrous cellulose is less than 0.5 mmol/g.

**5.** The laminate according to any one of claims 1 to 4, wherein the cationic compound has an amino group.

**6.** The laminate according to any one of claims 1 to 5, wherein a content of the fine fibrous cellulose in the fine fibrous cellulose-containing layer is 30% by mass or more.

**7.** The laminate according to any one of claims 1 to 6, wherein the fine fibrous cellulose-containing layer contains a hydrophilic polymer, and a content of the hydrophilic polymer based on 100 parts by mass of the fine fibrous cellulose is 5 parts by mass or more and 40 parts by mass or less.

**8.** The laminate according to any one of claims 1 to 7, wherein a total light transmittance of the laminate is 80% or more.

**9.** The laminate according to any one of claims 1 to 8, wherein a linear thermal expansion coefficient of the laminate in a measurement range of 100°C or higher and 150°C or lower is 70 ppm/K or less.

**10.** The laminate according to any one of claims 1 to 9, wherein a tensile elastic modulus of the laminate at 23°C is 5.0 GPa or more.

**11.** The laminate according to any one of claims 1 to 10, wherein the laminate includes:

a cationic layer on one surface of the fine fibrous cellulose-containing layer; and
a substrate film layer on a surface opposite to the surface having the cationic layer of the fine fibrous cellulose-containing layer.

**12.** The laminate according to any one of claims 1 to 11, wherein the fine fibrous cellulose-containing layer and the cationic layer are in contact with each other.

[Fig. 1]

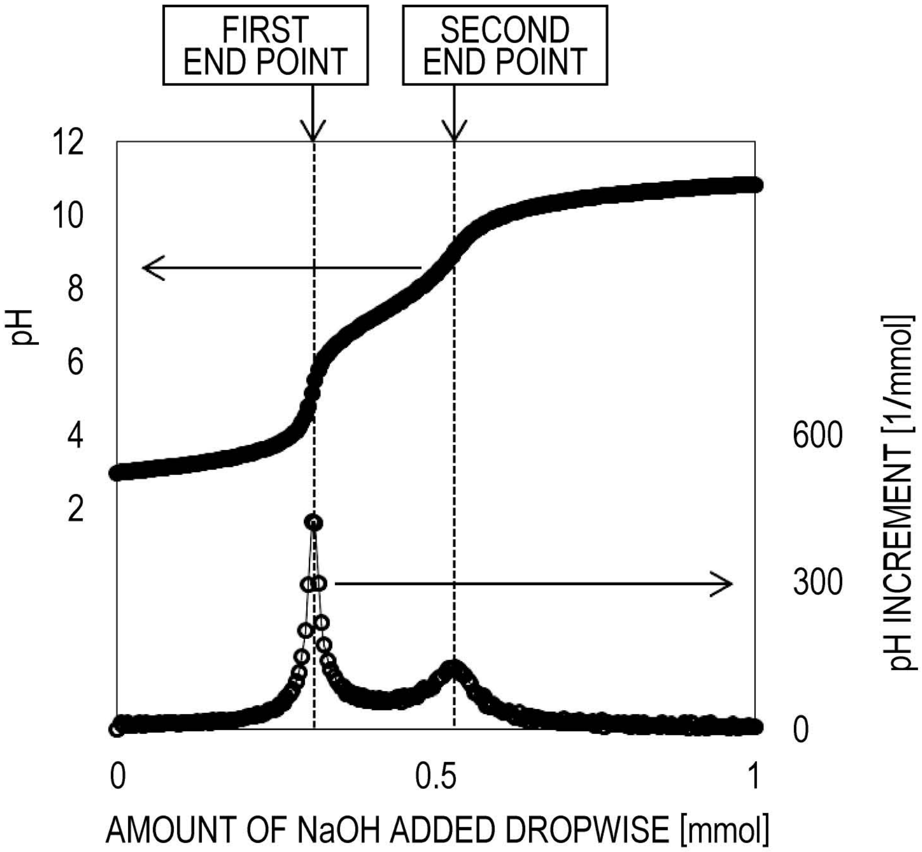
FIRST
END POINT
SECOND
END POINT
pH
12
10
8
6
4
2
pH INCREMENT [1/mmol]
600
300
0
0
0.5
1
AMOUNT OF NaOH ADDED DROPWISE [mmol]

[Fig. 2]

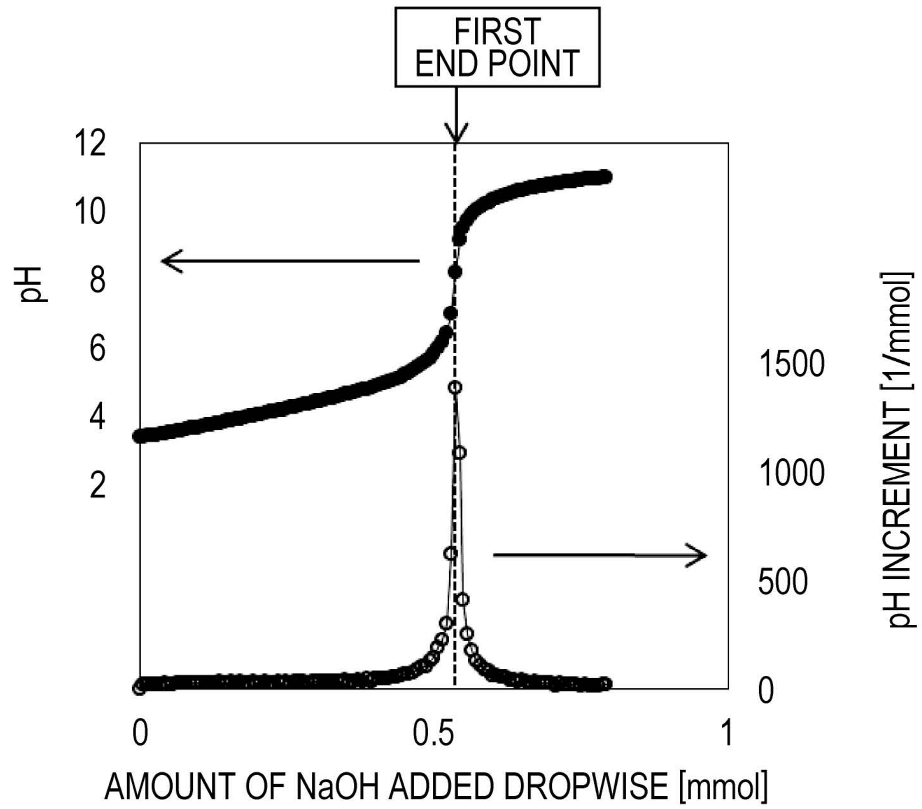
FIRST
END POINT
pH
12
10
8
6
4
2
pH INCREMENT [1/mmol]
1500
1000
500
0
0
0.5
1
AMOUNT OF NaOH ADDED DROPWISE [mmol]

## INTERNATIONAL SEARCH REPORT

International application No.
**PCT/JP2024/031646**

### A. CLASSIFICATION OF SUBJECT MATTER

***B32B 23/02***(2006.01)i; ***B32B 5/02***(2006.01)i; ***B32B 5/28***(2006.01)i; ***B32B 23/04***(2006.01)i; ***C08B 15/04***(2006.01)i
FI: B32B23/02; B32B5/02 A; B32B5/28 A; B32B23/04; C08B15/04

According to International Patent Classification (IPC) or to both national classification and IPC

### B. FIELDS SEARCHED

Minimum documentation searched (classification system followed by classification symbols)

B32B1/00-43/00; C08B1/00-37/18; D06M13/00-15/715; D21H11/00-27/42

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2017/170781 A1 (ASAHI KASEI KABUSHIKI KAISHA) 05 October 2017 (2017-10-05)<br>claim 1, example 1, manufacturing example 1, paragraphs [0060]-[0067] | 1, 5-7, 11-12 |
| X | JP 2019-206153 A (ASAHI KASEI KABUSHIKI KAISHA) 05 December 2019 (2019-12-05)<br>claim 1, example 1, manufacturing example 1, paragraph [0124] | 1, 5-6, 9-12 |
| X | JP 2020-69764 A (ASAHI KASEI KABUSHIKI KAISHA) 07 May 2020 (2020-05-07)<br>claim 1, example 1, manufacturing example 1 | 1, 5-6, 9-12 |
| X | WO 2012/070441 A1 (TOPPAN PRINTING CO., LTD.) 31 May 2012 (2012-05-31)<br>claims 1-2, example 1, paragraphs [0030], [0045], [0098] | 1-6, 8, 12 |
| X | JP 2014-79938 A (TOPPAN PRINTING CO., LTD.) 08 May 2014 (2014-05-08)<br>claims 1-3, examples, paragraphs [0019], [0033], [0035]-[0036], [0068] | 1-8, 12 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **08 November 2024** | **26 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
**PCT/JP2024/031646**

**C. DOCUMENTS CONSIDERED TO BE RELEVANT**

| Category* | Citation of document, with indication, where appropriate, of the relevant passages | Relevant to claim No. |
|---|---|---|
| X | WO 2019/212044 A1 (TOYO SEIKAN GROUP HOLDINGS, LTD.) 07 November 2019 (2019-11-07) claim 1, examples, paragraph [0017] | 1-6, 12 |

Form PCT/ISA/210 (second sheet) (July 2022)

**INTERNATIONAL SEARCH REPORT**
**Information on patent family members**

International application No.
**PCT/JP2024/031646**

| Patent document cited in search report | Publication date (day/month/year) | Patent family member(s) | Publication date (day/month/year) |
|---|---|---|---|
| WO 2017/170781 A1 | 05 October 2017 | US 2019/0118508 A1<br>claim 1, example 1, manufacturing example 1, paragraphs [0192]-[0199] | |
| JP 2019-206153 A | 05 December 2019 | (Family: none) | |
| JP 2020-69764 A | 07 May 2020 | (Family: none) | |
| WO 2012/070441 A1 | 31 May 2012 | US 2013/0260143 A1<br>claims 1-2, example 1, paragraphs [0045], [0062], [0136] | |
| JP 2014-79938 A | 08 May 2014 | (Family: none) | |
| WO 2019/212044 A1 | 07 November 2019 | US 2022/0041826 A1<br>claim 1, examples, paragraph [0033] | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022104299 A
- JP 2023087001 A
- JP 2023064090 A
- JP 2023084122 A
- JP 2010253824 A


### Non-patent literature cited in the description


- **SEAGAL et al.** *Textile Research Journal*, 1959, vol. 29, 786